# EUROPEAN PATENT SPECIFICATION

(11) **EP 4 346 170 B1**
(45) Date of publication and mention of the grant of the patent: **07.01.2026**
(21) Application number: 21952261.2
(22) Date of filing: 04.08.2021
(51) Int. Cl.: H04L 12/14, H04L 47/20, H04L 47/2441, H04W 28/02, H04M 15/00

(54) **TRANSMISSION METHOD AND APPARATUS, DEVICE, AND STORAGE MEDIUM**
ÜBERTRAGUNGSVERFAHREN UND -VORRICHTUNG, VORRICHTUNG UND SPEICHERMEDIUM
APPAREIL ET PROCÉDÉ DE TRANSMISSION, DISPOSITIF ET SUPPORT DE STOCKAGE

(43) Date of publication of application: 03.04.2024
(73) Proprietor: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN)
(74) Representative: Kraus & Lederer PartGmbB
(86) International application number: PCT/CN2021/110668
(87) International publication number: WO 2023/010361

(56) References cited:
- CN-A- 102 098 651
- CN-A- 113 162 788
- US-A1- 2019 191 330
- US-A1- 2019 254 118
- "3rd Generation Partnership Project; Technical Specification Group Core Network and Terminals; Study on CT WG3 Aspects of 5G System – Phase 1; Stage 3 (Release 15)", 3GPP STANDARD; TECHNICAL REPORT; 3GPP TR 29.890, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V2.0.0, 11 December 2017 (2017-12-11), Mobile Competence Centre ; 650, route des Lucioles ; F-06921 Sophia-Antipolis Cedex ; France , pages 1 - 157, XP051391855
- MOTOROLA MOBILITY, LENOVO: "PC5 QoS Rules definition", 3GPP DRAFT; S2-1907662_PC5_QOS_RULE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sapporo, Japan; 20190624 - 20190628, 18 June 2019 (2019-06-18), Mobile Competence Centre ; 650, route des Lucioles ; F-06921 Sophia-Antipolis Cedex ; France , XP051752625
- MOTOROLA MOBILITY, LENOVO: "PC5 QoS Rules definition", 3GPP DRAFT; S2-1907662_PC5_QOS_RULE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sapporo, Japan; 20190624 - 20190628, 18 June 2019 (2019-06-18), Mobile Competence Centre ; 650, route des Lucioles ; F-06921 Sophia-Antipolis Cedex ; France , XP051752625

## Description

### TECHNICAL FIELD

The present disclosure relates to communication technology, and more particularly, to a transmission method, an access network element, and a session management network element.

### BACKGROUND

The 5^{th} Generation (5G) mobile communication technology network system architecture can include: a terminal device, a (Radio) Access Network ((R)AN), and a Core Network (Core).

The terminal device establishes an access stratum connection with the (R)AN via a Uu interface, for exchanging access stratum messages or transmitting wireless data. The core network includes network elements such as an Access and Mobility Management Function (AMF), a Session Management Function (SMF), a Policy Control Function (PCF), and a User Plane Function (UPF). The terminal device establishes a Non-Access Stratum (NAS) connection with the AMF via an N1 interface for exchanging NAS messages. In addition to mobility management of the terminal device, the AMF is also responsible for forwarding session management related messages between the terminal device and the SMF. The PCF is responsible for formulating policies related to mobility management, session management, billing, etc. of the terminal device. The UPF performs data transmission with an external Data Network (DN) via an N6 interface, and with the (R)AN via an N3 interface for data transmission.

However, further discussions and researches are needed regarding how to control the data transmission between the terminal device, the (R)AN, and the core network.

Document US 2019/254118 A1 discloses a method in a session management function (SMF) of a network. The method comprises: receiving a session request message from a user equipment (UE), the session request message comprising: an identifier of the VE; a VE-specific application identifier that uniquely identifies a particular application among a set of one or more applications imple-mented on the VE; and an application-specific packet filter set identifier that uniquely identifies a particular packet filter set among a group of one or more packet filter sets supported by the particular application.

Document US 2019/191330 A1 discloses methods, systems and architectures which provide at least one aggregated tunnel protocol, in addition to the existing per PDU session tunnel protocols (1, 2, ... N). When the UE requests a new PDU session or a new QoS flow, the SMF may establish a Per PDU Session Tunnel to serve this PDU session. Alternatively, an Aggregated Tunnel may be selected to serve the PDU session or to serve the QoS flow. When a packet from a UE arrives, the receiving network function can send this packet either using a per PDU session tunnel protocol or aggregated tunnel protocol.

### SUMMARY

The invention is defined by the appended claims. The embodiments of the present disclosure provide a transmission method, an apparatus, a device, and a storage medium. The technical solutions are as follows.

In another aspect, an embodiment of the present disclosure provides a transmission method. The method is applied in an access network element and includes:

receiving third control information from a session management network element, the third control information being used to indicate a control parameter of an application data unit in a Quality of Service (QoS) flow; wherein the third control information includes third parameter information used to indicate a QoS parameter of the application data unit, wherein the third parameter information includes at least one of a bit error rate, a transmission delay or a code rate requirement, and the application data unit comprises a frame or a coded slice within the frame.

In another aspect, an embodiment of the present disclosure provides a session management network element. The session management network element includes a processor and a transceiver connected to the processor.

The transceiver is used to transmit third control information to an access network element, the third control information being used to indicate a control parameter of an application data unit in a Quality of Service, QoS, flow; wherein the third control information includes third parameter information used to indicate a QoS parameter of the application data unit, wherein the third parameter information includes at least one of a bit error rate, a transmission delay or a code rate requirement, and the application data unit comprises a frame or a coded slice within the frame.

In another aspect, an embodiment of the present disclosure provides an access network element. The access network element includes a processor and a transceiver connected to the processor.

The transceiver is configured to receive third control information from a session management network element, the third control information being used to indicate a control parameter of an application data unit in a Quality of Service (QoS) flow; wherein the third control information includes third parameter information used to indicate a QoS parameter of the application data unit, wherein the third parameter information includes at least one of a bit error rate, a transmission delay or a code rate requirement, and the application data unit comprises a frame or a coded slice within the frame.

The technical solutions according to the embodiments of the present disclosure may include the following advantageous effects.

By providing identification information for identifying an application data unit and a control parameter of the application data unit, it facilitates achieving transmission control of data at the application data unit level. Moreover, with the technical solutions according to the embodiments of the present disclosure, different QoS guarantees can be provided for different application data units in the service data flow, which facilitates accurately prioritized transmission of key data and avoids failure in parsing due to loss of the key data, thereby improving the reliability of data transmission.

### BRIEF DESCRIPTION OF DRAWINGS

In order to illustrate the technical solutions in the embodiments of the present disclosure more clearly, the figures needed to be used in the description of the embodiments will be briefly introduced below. Obviously, the figures in the following description are only some embodiments of the present disclosure. For those of ordinary skill in the art, other figures can also be obtained based on these drawings without inventive efforts.
FIG. 1 is a schematic diagram showing a 5G network system architecture according to an embodiment of the present disclosure;
FIG. 2 is a schematic diagram showing a 5G network system architecture according to another embodiment of the present disclosure;
FIG. 3 is a schematic diagram showing a QoS model according to an embodiment of the present disclosure;
FIG. 4 is a schematic diagram showing a user plane protocol stack according to an embodiment of the present disclosure;
FIG. 5 is a schematic diagram showing a user plane protocol stack according to another embodiment of the present disclosure;
FIG. 6 is a flowchart illustrating a transmission method according to an embodiment of the present disclosure;
FIG. 7 is a flowchart illustrating a transmission method according to another embodiment of the present disclosure;
FIG. 8 is a flowchart illustrating a transmission method according to another embodiment of the present disclosure;
FIG. 9 is a flowchart illustrating a transmission method according to another embodiment of the present disclosure;
FIG. 10 is a flowchart illustrating a transmission method according to another embodiment of the present disclosure;
FIG. 11 is a flowchart illustrating a transmission method according to another embodiment of the present disclosure;
FIG. 12 is a block diagram of a transmission apparatus according to an embodiment of the present disclosure;
FIG. 13 is a block diagram of a transmission apparatus according to another embodiment of the present disclosure;
FIG. 14 is a block diagram of a transmission apparatus according to another embodiment of the present disclosure;
FIG. 15 is a block diagram of a transmission apparatus according to another embodiment of the present disclosure;
FIG. 16 is a block diagram of a transmission apparatus according to another embodiment of the present disclosure;
FIG. 17 is a block diagram of a transmission apparatus according to another embodiment of the present disclosure;
FIG. 18 is a block diagram of a transmission apparatus according to another embodiment of the present disclosure;
FIG. 19 is a block diagram of a transmission apparatus according to another embodiment of the present disclosure;
FIG. 20 is a block diagram of a transmission apparatus according to another embodiment of the present disclosure;
FIG. 21 is a block diagram of a transmission apparatus according to another embodiment of the present disclosure;
FIG. 22 is a block diagram showing a structure of a policy control network element according to an embodiment of the present disclosure;
FIG. 23 is a block diagram showing a structure of a session management network element according to an embodiment of the present disclosure;
FIG. 24 is a block diagram showing a structure of a user plane network element according to an embodiment of the present disclosure;
FIG. 25 is a block diagram showing a structure of a terminal device according to an embodiment of the present disclosure; and
FIG. 26 is a block diagram showing a structure of an access network element according to an embodiment of the present disclosure.

### DESCRIPTION OF EMBODIMENTS

The embodiments of the present disclosure will be further described in detail below with reference to the accompanying drawings, such that the objects, technical solutions, and advantages of the present disclosure will become more apparent.

The network architecture and service scenario described in the embodiments of the present disclosure are provided for illustrating the technical solutions of the embodiments of the present disclosure more clearly, and do not constitute limitations on the technical solutions according to the embodiments of the present disclosure. With the evolution of the technology and the emergence of new service scenarios, the technical solutions provided in the embodiments of the present disclosure are also applicable to similar technical problems.

The technical solutions according to the embodiments of the present disclosure can be applied to various communication systems, such as: Global System of Mobile Communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Universal Mobile Telecommunication System (UMTS), Worldwide Interoperability for Microwave Access (WiMAX) communication system, 5th-Generation System (5GS) or New Radio (NR) system, or other subsequent evolved systems, etc.

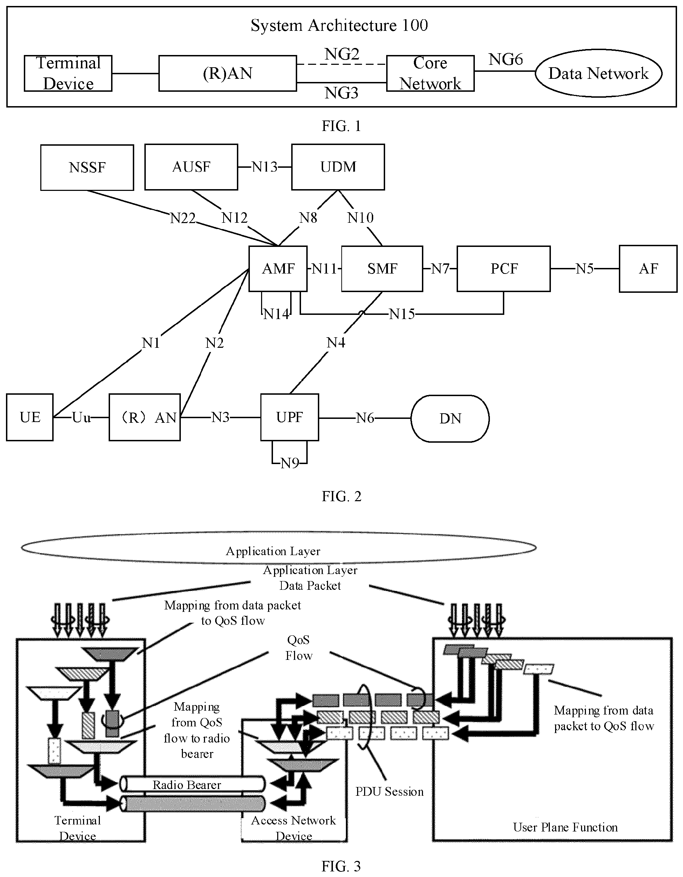

FIG. 1 is a schematic diagram showing a 5G network system architecture according to an embodiment of the present disclosure. As shown in FIG. 1, the system architecture 100 may include: a terminal device, a (radio) access network, a core network and a data network. Here, the terminal device, (radio) access network, and core network are main components of the system architecture 100. Logically, they can be divided into two parts: a user plane and a control plane. The control plane is responsible for management of the mobile network, and the user plane is responsible for transmission of service data. In FIG. 1, an NG2 reference point is located between the control plane of the (radio) access network and the control plane of the core network, an NG3 reference point is located between the user plane of the (radio) access network and the user plane of the core network, and an NG6 reference point is located between the user plane of the core network and the data network.

The terminal device is the entrance for mobile users to interact with the network. It can provide basic computing capabilities and storage capabilities, display service windows to users, and accept user operation inputs. The terminal device can connect to the (Radio) access network at an access stratum via a Uu interface, exchange access stratum messages or transmit wireless data. The terminal device can refer to a User Equipment (UE), access terminal, user unit, user station, mobile station, mobile, remote station, remote terminal, mobile device, wireless communication device, user agent or user device, and it may also be a cellular phone, cordless phone, Session Initiation Protocol (SIP) phone, Wireless Local Loop (WLL) station, Personal Digital1 Assistant (PDA), handheld device with wireless communication function, computing device or another processing device connected to a wireless modem, vehicle-mounted device, wearable device, etc. The embodiments of the present disclosure are not limited to any of these examples. For convenience of description, the devices mentioned above are collectively referred to as terminal devices.

The (radio) access network provides network access functions for authorized users in specific areas, and can use transmission tunnels of different qualities to transmit user data according to user levels, service requirements, etc. The (radio) access network can manage its own resources, provide access services to terminal devices on demand, and can also forward control signals and user data between terminal devices and the core network. One or more access network elements can be deployed in the (radio) access network. The access network element is a device deployed in the (radio) access network to provide wireless communication functions for terminal devices. The access network element can include various forms of macro base stations, micro base stations, relay stations, access points, etc. In systems using different wireless access technologies, the names of devices with access network element functions may be different. For example, in NR systems, they are called gNodeB or gNB. For convenience of description, in the embodiments of the present disclosure, the above devices that provide wireless communication functions for terminal devices are collectively referred to as access network elements.

The core network is responsible for maintaining mobile network subscription data, managing mobile network elements, and providing terminal devices with functions such as session management, mobility management, policy management, and security authentication. When a terminal device is attached, it provides network access authentication for the terminal device. When the terminal device has a service request, it allocates network resources to the terminal device. When the terminal device moves, it updates network resources for the terminal device. When the terminal device is idle, it provides a fast recovery mechanism for the terminal device. When the terminal device is detached, it releases network resources for the terminal device. When the terminal device has service data, it provides data routing functions for the terminal device, such as forwarding uplink data to the data network, or receiving downlink data from the data network and forwarding it to the (radio) access network, thereby transmitting it to the terminal device.

The data network provides service services to users. Generally, clients are located in terminal devices and servers are located in the data network. The data network can be a private network (such as a LAN), an external network not controlled by an operator (such as the Internet), or a proprietary network jointly deployed by operators (such as a network deployed for configuring IP multimedia network subsystem (IMS) service), and the embodiments of the present disclosure are not limited to any of these examples.

Here, as shown in FIG. 2, the user plane of the core network includes a UPF, and the control plane of the core network includes: an AMF, an SMF, a PCF, an Authentication Server Function (AUSF), a Unified Data Management (UDM), an Application Function (AF), a Network Slice Selection Function (NSSF), etc. The functions of these functional entities (or "network elements") are as follows.

The UPF is responsible for routing and forwarding of user plane data packets, user plane QoS processing, user usage information statistics and reporting, interaction with external data networks, etc.

The AMF handles all terminal device tasks related to connection and mobility management, such as registration management, connection management, mobility management, etc.

The SMF is responsible for establishment, modification and release of sessions, maintenance of tunnels between the UPF and Access Nodes (ANs), allocation and management of Internet Protocol (IP) addresses for terminal devices, selection and control of UPF functions, billing data collection and billing interface support, etc.

The PCF supports a unified policy framework for managing network behaviors and provides operator network control policies to other network elements and terminal devices.

The AUSF is configured to receive the AMF's request for authentication of a terminal device, request a key from the UDM, and then forward the issued key to the AMF for authentication processing.

The UDM includes functions such as generation and storage of user subscription data, and management of authentication data, and supports interaction with external third-party servers.

The AF can be the operator's internal application function (such as IMS, etc.), or can be a third-party service (such as web service, video, game, etc.).

The NSSF is mainly used for network slicing selection.

In the system architecture shown in FIG. 2, the terminal device (UE) establishes an access stratum connection with the (radio) access network, (R)AN, via a Uu interface, exchanges access stratum messages or transmits wireless data. The terminal device establishes a non-access stratum connection with the AMF via an N1 interface and exchanges NAS messages. In addition to mobility management of terminal devices, the AMF is also responsible for forwarding session management related messages between terminal devices and the SMF. The PCF is responsible for formulating policies for mobility management of terminal devices, session management, billing, etc. The UPF communicates data with an external Data Network (DN) via an N6 interface, and communicates data with the (radio) access network via an N3 interface.

It should be noted that the names of the interfaces between the network elements in FIGS. 1 and 2 are just examples. In specific implementations, the names of the interfaces may be different, and the embodiments of the present disclosure are not limited to these names. The names of the network elements (such as SMF, PCF, UPF, etc.) included in FIGS. 1 and 2 are only examples and do not limit the functions of the network elements themselves. In 5G and other future networks, the above network elements can also have other names, and the embodiments of the present disclosure are not limited to this. For example, in a 6G network, some or all of the above network elements may use the terminologies used in 5G, or may adopt other names. In addition, it should be understood that the names of the above messages (or signaling) transmitted between the network elements are only examples and do not constitute any limitation on the functions of the messages themselves.

In one example, the 5G network provides data transmission services between terminal devices and external data networks using PDU (Protocol Data Unit) sessions, and can provide differentiated Quality of Service (QoS) guarantees for different service data flows transmitted in the same PDU session based on different services.

FIG. 3 is a schematic diagram showing a QoS model according to an embodiment of the present disclosure. The QoS model shown in FIG. 3 performs QoS control based on the granularity of QoS flows. Optionally, after the terminal device accesses the 5G network via the Uu interface, a QoS flow is established under the control of the SMF for data transmission. The SMF provides the QoS flow configuration information of each QoS flow to the access network element, including information such as a 5G QoS Identifier (5QI), an Allocation and Retention Priority (ARP), and a code rate requirement. Here, the 5QI is an index value that can correspond to QoS characteristics such as delay and bit error rate requirements. For example, when the value of 5QI is 66, the corresponding delay is 100 ms (milliseconds) and the corresponding bit error rate is 1e-2. The ARP allocates or maintains priorities of resources for QoS flows. For each QoS flow, the access network element schedules wireless resources according to the QoS flow configuration information received from the SMF to ensure the QoS requirements of the QoS flow.

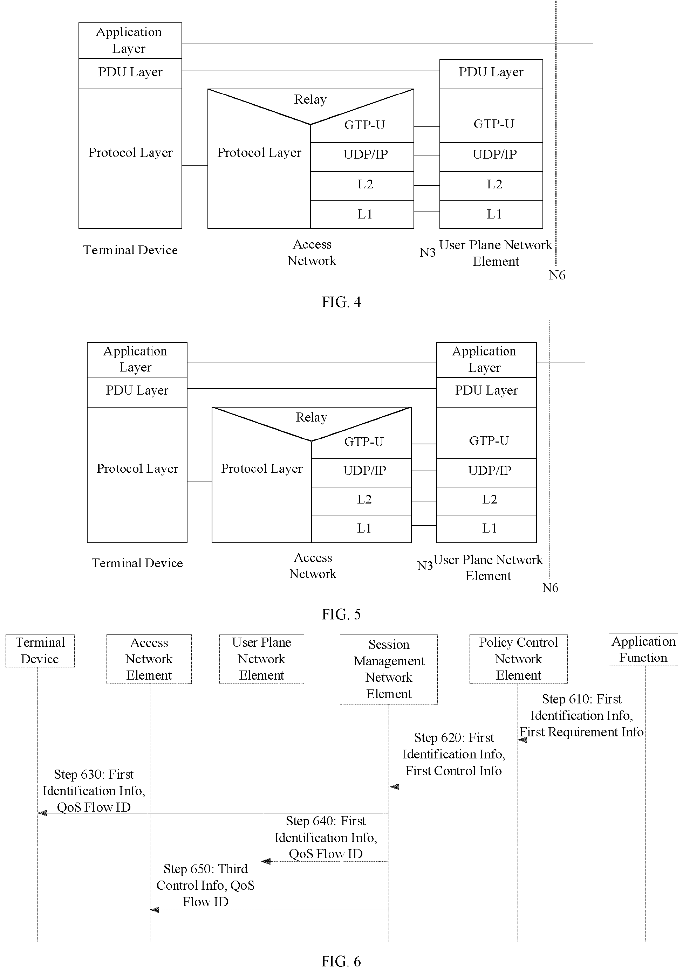

FIG. 4 is a schematic diagram showing a user plane protocol stack according to an embodiment of the present disclosure. Based on the user plane protocol stack shown in FIG. 4, the UPF in the core network can parse up to the PDU layer of the data packet. For example, for an IP data packet, it can be parsed up to the IP data header (including information such as source IP address, destination IP address, source port number, and destination port number). Therefore, the UPF determines a QoS flow based on the parsed information, and transmits the service data flow using the corresponding QoS flow to obtain the corresponding QoS guarantee.

In some examples, the application layer data interacted between the terminal device and the application server or the peer terminal device is typically subjected to specific coding and compression processes, including Augmented Reality (AR), Virtual Reality (VR), and Cloud Gaming data. Optionally, the coding and compression may include coding and compression based on video codec technology standards such as H.264. The Video coding and decoding technology standards such as H.264 format data via a Network Abstraction Layer (NAL) and provide header information for application layer data. During the coding process, a part of a video frame sequence is compressed into I frames, a part of the video frame sequence is compressed into P frames, and a part of the video frame sequence is compressed into B frames. Here, the I frames are key frames and belong to intra-frame compression, and can be decoded based on data of themselves. The P frames and B frames do not have complete picture data, but only the data that is different from pictures of adjacent frames, and can be decoded using pictures of adjacent frames plus differences defined in these frames to generate the final picture.

However, referring to the user plane protocol stack shown in FIG. 4, for video service data streams that have been processed such as compressed and coded, the network cannot parse the data header of the application layer data, and therefore cannot determine whether the compressed and coded data belongs to I frames, P frames or B frames, such that the data can only be regarded as the same service data flow, to which the same QoS guarantee is applied. In this case, the key frames cannot be accurately prioritized for transmission, which may result in loss of key frame data and thus a significant degradation of the service experience.

In view of above, the embodiments of the present disclosure provide a transmission method that can solve the above technical problems and achieve control of data at the application data unit level. As shown in FIG. 5, in order to implement the transmission method according to the present disclosure, the UPF (user plane network element) in the core network needs to be able to parse up to the application layer of the data packet. For example, it needs to be able to read NAL formatted data as coded and compressed using video codec technologies such as H.264. In the following, the transmission method according to the present disclosure will be introduced and explained with reference to several embodiments.

FIG. 6 is a flowchart illustrating a transmission method according to an embodiment of the present disclosure. The method can be applied to the system architecture shown in FIG. 1 and FIG. 2, and the method can be based on the QoS model shown in FIG. 3 and the user plane protocol stack shown in FIG. 5. The method may include at least some of the following steps.

At Step 610, an application function transmits first identification information to a policy control network element.

The application function can be the operator's internal application function (such as IMS, etc.), or a third-party service (such as web service, video, game, etc.). In the 5G network system architecture, the application function can be implemented as an AF. The policy control network element is responsible for providing operator network control policies to other network elements and terminal devices. In the 5G network system architecture, the policy control network element can be implemented as a PCF. In other or future network system architectures, the application function and the policy control network element may partially or fully use the names in the 5G network system architecture, or may have other names. It should be understood that these names shall fall within the scope of protection of the present disclosure.

In an embodiment of the present disclosure, the application function can transmit the first identification information to the policy control network element in the core network. The first identification information is used to identify an application data unit in a Service Date Flow (SDF), so as to facilitate transmission control of data at the application data unit level in subsequent data transmission processes. Therefore, it can also be considered that the first identification information is used to perform transmission control at the application data unit level. In an embodiment of the present disclosure, the application function can add the first identification information to a service data flow filter (SDF filter), and transmit the service data flow filter including the first identification information to the policy control network element. Alternatively, the service data flow filter and the first identification information may be transmitted to the policy control network element as separate information, whether at the same time or not. Here, the service data flow filter is used to match the service data flow. The service data flow filter includes, but not limited to, information related to a transport layer address and/or protocol, such as IP 5-tuple, IP triplet or the like. For other descriptions on whether the first identification information is in the service data flow filter or the first identification information is outside the service data flow filter, reference can be made to the following embodiments, and details will be omitted here.

The application data unit may include at least one data packet. The embodiment of the present disclosure is not limited to any specific implementation of the application data unit. When the service data flow is implemented as an audio and video stream, the application data unit may be a frame in the audio and video stream or a coded slice within the frame. The application data unit may be called an Application Data Unit (ADU), or may have other names, and the embodiment of the present disclosure is not limited to this. It should be noted that a service data flow can include any number of application data units (each application data unit includes at least one data packet), and can also include any number of data packets that do not belong to any application data unit.

The embodiment of the present disclosure is not limited to any specific content of the first identification information used to identify the application data unit. In one example, the first identification information may include, but not limited to, at least one of: first identifying information, first type information, etc. The first identifying information is used to identify the application data unit. For example, when the application data unit is implemented as a frame, the first identifying information may include a frame number, or when the application data unit is implemented as a coded slice within the frame, the first identifying information may include a coded slice identifier. The first type information is used to indicate a type of the application data unit. Optionally, the first type information may include, but not limited to, any one of the following: a self-coded application data unit, a forward predictive coded application data unit, and bidirectional predictive coded application data unit, a sequence parameter set, an image parameter set, etc.

In order to indicate a control requirement of the application function for the application data unit to the policy control network element, in one example, as shown in FIG. 6, the above method may further include: the application function transmits first requirement information to the policy control network element. The first requirement information is used to indicate a control requirement of the application function for the application data unit. That is, the first requirement information corresponds to the application data unit in the service data flow. Optionally, the first requirement information may include, but not limited to, at least one of: first level information, first parameter information, etc. The first level information is used to indicate a level of the application data unit. Optionally, the first level information may include, but not limited to, any one of: an importance level of the application data unit in the application layer, whether the application data unit is allowed to be skipped or discarded, etc. The first parameter information is used to indicate a QoS parameter of the application data unit. Optionally, the first parameter information may include, but not limited to, at least one of: a QoS level identifier, a transport layer priority, a bit error rate, a transmission delay, a code rate requirement, etc.

At Step 620, the policy control network element transmits the first identification information and first control information to the session management network element.

The session management network element is responsible for functions including but not limited to: session establishment, modification and release; maintenance of tunnels between the UPF and the AN; allocation and management of IP addresses for terminal devices; selection and control of UPF functions; collection of billing data and support of billing interfaces, etc. For example, in the 5G network system architecture, the session management network element can be implemented as an SMF. In other or future network system architectures, the session management network element may continue to use the name in the 5G network system architecture, or it can have other names. It should be understood that these names should fall within the protection scope of the present disclosure.

In an embodiment of the present disclosure, after receiving the first identification information from the application function, the policy control network element may transmit the first identification information and the first control information to the session management network element. For the description of the content and transmission method of the first identification information, reference can be made to the above embodiments and the following embodiments, and details thereof will be omitted here. The first control information is used to indicate a control parameter of the application data unit, that is, the first control information corresponds to the application data unit in the service data flow. Optionally, the first control information may include, but not limited to, at least one of: second level information, second parameter information, etc. The second level information is used to indicate a level of the application data unit. Optionally, the second level information may include, but not limited to, any one of: an importance level of the application data unit in the application layer, whether the application data unit is allowed to be skipped or discarded, etc. The second parameter information is used to indicate a QoS parameter of the application data unit. Optionally, the second parameter information may include, but not limited to, at least one of: a QoS level identifier, a transport layer priority, a bit error rate, a transmission delay, a code rate requirement, etc.

It should be noted that the first control information refers to a control parameter of the application data unit determined by the policy control network element, and the above first requirement information refers to a control requirement of the application data unit required by the application function. When the application function transmits the first requirement information to the policy control network element, the policy control network element may determine the first control information based on the first requirement information, or may ignore the first requirement information when determining the first control information, and the embodiment of the present disclosure is not limited to this. In an example where the policy control network element determines the first control information based on the first requirement information, assuming that the first requirement information includes the first level information and the first parameter information, and the first control information includes the second level information and the second parameter information, the policy control network element can directly use the first level information as the second level information, and/or use the first parameter information as the second parameter information, or the policy control network element can re-determine the second parameter information based on the first parameter information. For example, the first parameter information may include a bit error rate required by the application function, and the policy control network element can set a bit error rate in the second parameter information to be smaller than the bit error rate in the first parameter information.

At Step 630, the session management network element transmits the first identification information to a terminal device.

After receiving the first identification information from the policy control network element, the session management network element may transmit the first identification information to the terminal device. For description of the content and transmission method of the first identification information, reference can be made to the above embodiments and the following embodiments, and details thereof will be omitted here. In order to enable the terminal device to determine the QoS flow for transmitting the service data flow, in one example, as shown in FIG. 6, the above method may further include: the session management network element transmitting a QoS flow identifier to the terminal device, the QoS flow identifier being used to identify the QoS flow for transmitting the service data flow. For description of the process of determining the QoS flow for transmitting the service data flow and the process of determining the QoS flow identifier, reference can be made to the following embodiments and details thereof will be omitted here.

At Step 640, the session management network element transmits the first identification information to the user plane network element.

The user plane network element is responsible for functions including, but not limited to: routing and forwarding of user plane data packets, user plane QoS processing, user usage information statistics and reporting, interaction with external data networks, etc. For example, in the 5G network system architecture, the user plane network element can be implemented as a UPF. In other or future network system architectures, the user plane network element can continue to use the name in the 5G network system architecture, or they can have other names. It should be understood that these names should fall within the protection scope of the present disclosure.

After receiving the first identification information from the policy control network element, the session management network element may transmit the first identification information to the user plane network element. For description of the content and transmission method of the first identification information, reference can be made to the above embodiments and the following embodiments, and details thereof will be omitted here. In order to enable the user plane network element to determine the QoS flow for transmitting the service data flow, in an example, as shown in FIG. 6, the above method may further include: the session management network element transmitting a QoS flow identifier to the user plane network element, the QoS flow identifier being used to identify the QoS flow for transmitting the service data flow. For description of the process of determining the QoS flow for transmitting the service data flow and the process of determining the QoS flow identifier, reference can be made to the following embodiments and details thereof will be omitted here.

At Step 650, the session management network element transmits third control information to an access network element.

After receiving the first control information from the policy control network element, the session management network element transmits the third control information to the access network element. Since the access network element cannot identify up to the granularity of the service data flow, the session management network element can determine the QoS flow corresponding to the service data flow and determine the control parameter of the application data unit in the QoS flow. Then, the session management network element transmits the third control information to the access network element, the third control information being used to indicate the control parameter of the application data unit in the QoS flow. That is, the third control information corresponds to the application data unit in the QoS flow. The third control information includes at least one of: third level information, third parameter information, etc. The third level information includes, but not limited to, any one of: an importance level of the application data unit in the application layer, whether the application data unit is allowed to be skipped or discarded, etc. The third parameter information is used to indicate a QoS parameter of the application data unit. The third parameter information includes at least one of: a bit error rate, a transmission delay, or a code rate requirement. For further descriptions of the process of determining the third control information, reference can be made to the following method embodiments, and details thereof will be omitted here.

In order to enable the access network element to determine the QoS flow for transmitting the service data flow, in an example, as shown in FIG. 6, the above method may further include: the session management network element transmitting a QoS flow identifier to the access network element, the QoS flow identifier being used to identify the QoS flow for transmitting the service data flow (or the above application data unit). For description of the process of determining the QoS flow for transmitting the service data flow and the process of determining the QoS flow identifier, reference can be made to the following embodiments and details thereof will be omitted here.

It should be noted that the embodiment of the present disclosure is not limited to any order for performing the step 630, step 640 and step 650. In one example, the session management network element can perform the step 630, step 640 and step 650 in parallel. In another example, the session management network element may perform the step 630, step 640 and step 650 in sequence, or the step 640, step 630 and step 650 in sequence, or the step 650, step 640 and step 630 in sequence, or the step 630 and step 640 simultaneously and then the step 650, or the like. It should be understood that all logical sequence combinations corresponding to the step 630, step 640 and step 650 should fall within the protection scope of the present disclosure.

To summarize, with the technical solutions according to the embodiments of the present disclosure, by providing identification information for identifying an application data unit and a control parameter of the application data unit, it facilitates achieving transmission control of data at the application data unit level. Moreover, with the technical solutions according to the embodiments of the present disclosure, different QoS guarantees can be provided for different application data units in the service data flow, which facilitates accurately prioritized transmission of key data and avoids failure in parsing due to loss of the key data, thereby improving the reliability of data transmission.

Next, when the first identification information is in the service data flow filter, the operations performed by the entity performing the respective steps in the embodiment of FIG. 6 will be introduced and explained.

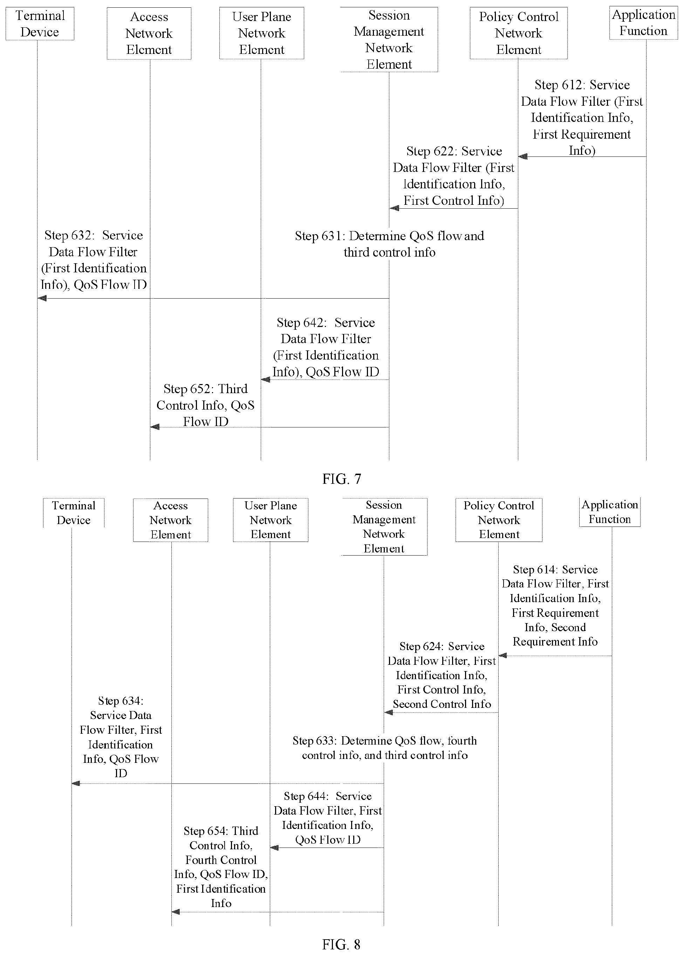

FIG. 7 is a flowchart illustrating a transmission method according to an embodiment of the present disclosure. The method can be applied to the system architecture shown in FIG. 1 and FIG. 2, and the method can be based on the QoS model shown in FIG. 3 and the user plane protocol stack shown in FIG. 5. The method may include at least some of the following steps.

In the embodiment of FIG. 7, the above step 610 is implemented as the following step 612, the above step 620 is implemented as the following step 622, the following step 631 is included before the above step 630, the above step 630 is implemented as the following step 632, the above step 640 is implemented as the following step 642, and the above step 650 is implemented as the following step 652.

At Step 612, an application function transmits a service data flow filter to a policy control network element, the service data flow filter including first identification information.

The first identification information can be added to the service data flow filter, such that among data packets included in the service data flow, only data packets in the application data unit can match the service data flow filter. That is, the service data flow filter is used to match the application data units in the service data flow.

Based on this, the application function may transmit the service data flow filter to the policy control network element, the service data flow filter including the first identification information. In one example, as shown in FIG. 7, the above step 612 further includes: the application function transmitting first requirement information to the policy control network element, the first requirement information being used to indicate a control requirement of the application data unit. The first requirement information corresponds to the application data unit in the service data flow. Regarding the content that is not described in detail in the step 612, such as the content of the first identification information, the content of the first requirement information, the content of the service data flow filter, etc., reference can be made to the description in the above step 610, and details thereof will be omitted here.

At Step 622, the policy control network element transmits the service data flow filter and first control information to a session management network element. The service data flow filter includes the first identification information.

After receiving the service data flow filter from the application function, the policy control network element may transmit the service data flow filter and the first control information to the session management network element, the service data flow filter including the first identification information. The first control information corresponds to the application data unit in the service data flow. For content that is not described in detail in the step 622, such as the process of determining the first control information, reference can be made to the description in the above step 620, and details thereof will be omitted here.

At Step 631, the session management network element determines a QoS flow for transmitting the service data flow and third control information based on the first control information, the third control information being used to indicate a control parameter of the application data unit in the QoS flow.

Since in the embodiment of FIG. 7, the service data flow filter can only match application data units in the service data flow, only the control parameters of the application data units need to be considered for QoS guarantee of the service data flow. Based on this, after receiving the first control information from the policy control network element, the session management network element determines the QoS flow for transmitting the service data flow based on the first control information. For example, service data flows including application data units with different control parameters may be transmitted using different QoS flows.

In addition, the session management network element also needs to determine the third control information according to the first control information, so as to subsequently indicate the control parameter of the application data unit in the QoS flow to an access network element. Optionally, when the first control information includes second level information and second parameter information, and the third control information includes third level information and third parameter information, the session management network element may directly use the second level information as the third level information, and determine the third parameter information according to the second parameter information. For example, a bit error rate in the third parameter information is a sum of bit error rates in at least one piece of second parameter information, and a code rate in the third parameter information is a sum of code rates in at least one piece of second parameter information, and so on. Here, at least one second parameter information is used to indicate: control parameters of application data units in service data flows aggregated into the same QoS flow.

For content that is not described in detail in the step 631, such as the content of the third control information, reference can be made to the description in the above step 650, and details thereof will be omitted here.

At Step 632, the session management network element transmits the service data flow filter to a terminal device, the service data flow filter including the first identification information.

After receiving the service data flow filter from the policy control network element, the session management network element may transmit the service data flow filter to the terminal device, the service data flow filter including the first identification information. In one example, as shown in FIG. 7, the above step 632 further includes: the session management network element transmitting a QoS flow identifier to the terminal device, the QoS flow identifier being used to identify a QoS flow for transmitting the service data flow.

At Step 642, the session management network element transmits the service data flow filter to a user plane network element, the service data flow filter including the first identification information.

After receiving the service data flow filter from the policy control network element, the session management network element may also transmit the service data flow filter to the user plane network element, the service data flow filter including the first identification information. In one example, as shown in FIG. 7, the above step 642 further includes: the session management network element transmitting the QoS flow identifier to the user plane network element, the QoS flow identifier being used to identify the QoS flow for transmitting the service data flow.

At Step 652, the session management network element transmits the third control information to the access network element.

After receiving the first control information from the policy control network element, the session management network element may also transmit the third control information determined by the session management network element based on the first control information in the step 631 to the access network element. The third control information corresponds to the application data unit in the QoS flow. In one example, as shown in FIG. 7, the above step 652 further includes: the session management network element transmitting the QoS flow identifier to the access network element, the QoS flow identifier being used to identify the QoS flow for transmitting the service data flow.

To summarize, the technical solution according to the embodiment of the present disclosure adds the identification information used to identify the application data unit to the service data flow filter, such that the service data flow filter can match the data packets in the application data unit. Therefore, the transmission control at the application data unit level according to the embodiments of the present disclosure can be compatible with the message design for transmission control at the service data flow level.

Next, when the first identification information is outside the service data flow filter, the operations performed by the entity performing the respective steps in the embodiment of FIG. 6 will be introduced and explained.

FIG. 8 is a flowchart illustrating a transmission method according to an embodiment of the present disclosure. The method can be applied to the system architecture shown in FIG. 1 and FIG. 2, and the method can be based on the QoS model shown in FIG. 3 and the user plane protocol stack shown in FIG. 5. The method may include at least some of the following steps.

In the embodiment of FIG. 8, the above step 610 is implemented as the following step 614, the above step 620 is implemented as the following step 624, the following step 633 is included before the above step 630, the above step 630 is implemented as the following step 634, the above step 640 is implemented as the following step 644, and the above step 650 is implemented as the following step 654.

At Step 614, an application function transmits first identification information and a service data flow filter to a policy control network element.

The first identification information can be independent of the service data flow filter. Therefore, among data packets included in the service data flow, not only the data packets in the application data unit can match the service data flow filter, but there are also data packets that do not belong to any application data unit can also match the service data flow filter. That is, the service data flow filter is used to match the service data flow (including the data packets in the application data unit in the service data flow, and also includes the data packets in the service data flow that do not belong to any application data unit).

Based on this, the application function transmits the first identification information and the service data flow filter to the policy control network element. In one example, as shown in FIG. 8, the above step 614 further includes: the application function transmitting first requirement information to the policy control network element, the first requirement information being used to indicate a control requirement of the application data unit. In one example, as shown in FIG. 8, the above step 614 further includes: the application function transmitting second requirement information to the policy control network element, the second requirement information being used to indicate a QoS requirement of the application function for the service data flow. The second requirement information corresponds to the service data flow, and the first requirement information corresponds to the application data unit in the service data flow. Regarding the content that is not described in detail in the step 614, such as the content of the first identification information, the content of the first requirement information, the content of the service data flow filter, etc., reference can be made to the description in the above step 610, and details thereof will be omitted here.

At Step 624, the policy control network element transmits the first identification information, the service data flow filter and first control information to a session management network element.

After receiving the first identification information and the service data flow filter from the application function, the policy control network element may transmit the first identification information, the service data flow filter and the first control information to the session management network element. In one example, as shown in FIG. 8, the above step 624 further includes: the policy control network element transmitting second control information to the session management network element, the second control information being used to indicate a QoS parameter of the service data flow. The second control information corresponds to the service data flow, and the first control information corresponds to the application data unit in the service data flow. For content that is not described in detail in the step 624, such as the process for determining the first control information, reference can be made to the description in the above step 620, and details thereof will be omitted here.

At Step 633, the session management network element determines a QoS flow for transmitting the service data flow and fourth control information based on the second control information, the fourth control information being used to indicate the QoS parameter of the QoS flow; and determines third control information based on the first control information, the third control information being used to indicate the control parameter of the application data unit in the QoS flow.

In the embodiment of FIG. 8, the service data flow filter can not only match data packets in the application data unit in the service data flow, but also match data packets in the service data flow that do not belong to any application data unit. Therefore, for the QoS guarantee of the service data flow, not only the control parameter of the application data unit, but also the QoS parameter of the service data flow, needs to be considered. Based on this, after receiving the first control information and the second control information from the policy control network element, the session management network element determines the QoS flow for transmitting the service data flow based on the second control information. For example, service data flows with different control parameters may be transmitted using different QoS flows, and service data flows with the same control parameters may be transmitted using the same QoS flow. It should be understood that in the embodiment of FIG. 8, the session management network element does not need to consider whether the data packet belongs to the application data unit in the process of determining the QoS flow for transmitting the service data flow.

In addition, the session management network element also needs to determine the fourth control information according to the second control information, so as to subsequently indicate the QoS parameter of the QoS flow to an access network element. For example, the session management network element uses a sum of code rates in the second control information as a code rate in the fourth control information, and uses a sum of bit error rates in the second control information as a bit error rate in the fourth control information, etc. Furthermore, the session management network element also needs to determine the third control information according to the first control information, so as to subsequently indicate the control parameter of the application data unit in the QoS flow to the access network element.

For content that is not described in detail in step 631, such as the content of the third control information, the method for determining the third control information, etc., reference can be made to the description in the above step 650 and the above step 631, and details thereof will be omitted here.

At Step 634, the session management network element transmits the first identification information and the service data flow filter to a terminal device.

After receiving the first identification information and the service data flow filter from the policy control network element, the session management network element may transmit the first identification information and the service data flow filter to the terminal device. In one example, as shown in FIG. 8, the above step 634 further includes: the session management network element transmitting a QoS flow identifier to the terminal device, the QoS flow identifier being used to identify the QoS flow for transmitting the service data flow.

At Step 644, the session management network element transmits the first identification information and the service data flow filter to a user plane network element.

After receiving the first identification information and the service data flow filter from the policy control network element, the session management network element may also transmit the first identification information and the service data flow filter to the user plane network element. In one example, as shown in FIG. 8, the above step 644 further includes: the session management network element transmitting a QoS flow identifier to the user plane network element, the QoS flow identifier being used to identify the QoS flow for transmitting the service data flow.

At Step 654, the session management network element transmits the fourth control information and the third control information to the access network element.

After receiving the first control information and the second control information from the policy control network element, the session management network element may also transmit the fourth control information determined by the session management network element based on the second control information and third control information determined based on the first control information in the step 633 to the access network element. The fourth control information corresponds to the QoS flow, and the third control information corresponds to the application data unit in the QoS flow. In one example, as shown in FIG. 8, the above step 654 further includes: the session management network element transmitting a QoS flow identifier to the access network element, the QoS flow identifier being used to identify the QoS flow for transmitting the service data flow. In order to enable the access network element to identify the application data unit and implement a different QoS guarantee for the data packets in the application data unit than for other data packets in the service data flow, in an example, as shown in FIG. 8, the above Step 654 further includes: the session management network element transmitting the first identification information to the access network element.

To summarize, the technical solution according to the embodiment of the present disclosure uses the identification information used to identify the application data unit as information independent of the service data flow filter, such that the service data flow filter can not only match the data packets in the application data unit, but also match the data packets that do not belong to any application data unit in the service data flow, thereby achieving targeted QoS guarantee for application data units in the service data flow on the basis of overall QoS guarantee for the service data flow.

Based on the above embodiment in FIG. 8, the session management network element may also determine a number of the application data unit based on the first identification information in the above step 633. The method will be introduced and explained below.

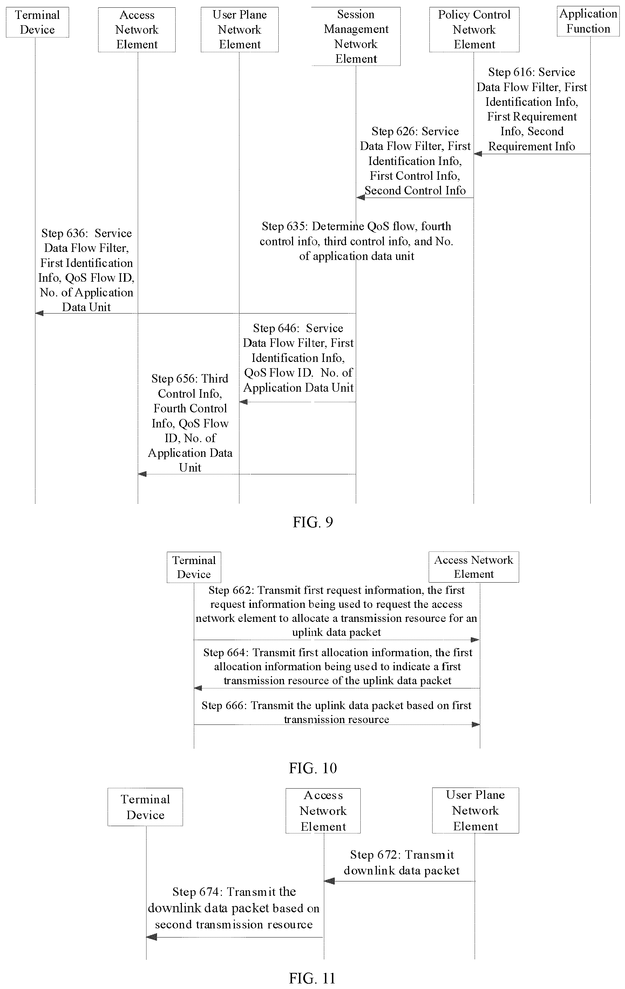

FIG. 9 is a flowchart illustrating a transmission method according to an embodiment of the present disclosure. The method can be applied to the system architecture shown in FIG. 1 and FIG. 2, and the method can be based on the QoS model shown in FIG. 3 and the user plane protocol stack shown in FIG. 5. The method may include at least some of the following steps.

In the embodiment of FIG. 9, the above step 610 is implemented as the following step 616, the above step 620 is implemented as the following step 626, the following step 635 is included before the above step 630, the above step 630 is implemented as the following step 636, the above step 640 is implemented as the following step 646, and the above step 650 is implemented as the following step 656.

At Step 616, an application function transmits first identification information and a service data flow filter to a policy control network element.

At Step 626, the policy control network element transmits the first identification information, the service data flow filter, and first control information to a session management network element.

For description of the step 616 and step 626, reference can be made to the description of the step 614 and step 624 in the above embodiment of FIG. 8, and details thereof will be omitted here.

At Step 635, the session management network element determines a QoS flow for transmitting a service data flow and fourth control information based on second control information, the fourth control information being used to indicate a QoS parameter of the QoS flow; determines third control information based on the first control information, the third control information being used to indicate a control parameter of the application data unit in the QoS flow; and determines a number of the application data unit based on the first identification information and/or the service data flow filter.

In the embodiment of FIG. 9, the session management network element re-numbers the application data unit, and the session management network element determines the number of the application data unit according to the first identification information and/or the service data flow filter. For example, the session management network element renumbers the application data units identified as 1 in the service data flow filter A into A1 (that is, the numbers of the application data units are A1), and the application data units identified as 1 in the service data flow filter B into B1 (that is, the numbers of the application data units are B1). For description of the content that is not described in detail in the step 635, such as the process for determining the fourth control information, the process for determining the third control information, etc., reference can be made to the description of the step 633 in the above embodiment of FIG. 8, and details thereof will be omitted here.

At Step 636, the session management network element transmits the number of the application data unit to a terminal device.

After re-determining the number of the application data unit, the session management network element may transmit the number of the application data unit to the terminal device. In one example, as shown in FIG. 9, the above step 636 further includes: the session management network element transmitting the first identification information, the service data flow filter and the QoS flow identifier to the terminal device.

At Step 646, the session management network element transmits the number of the application data unit to a user plane device.

After re-determining the number of the application data unit, the session management network element may also transmit the number of the application data unit to the user plane network element. In one example, as shown in FIG. 9, the above step 646 further includes: the session management network element transmitting the first identification information, the service data flow filter and the QoS flow identifier to the user plane network element.

At Step 656, the session management network element transmits the number of the application data unit to an access network element.

After re-determining the number of the application data unit, the session management network element may also transmit the number of the application data unit to the access network element. In this case, the session management network element does not need to transmit the first identification information used to identify the application data unit to the access network element, but replaces the first identification information in the step 654 in the embodiment of FIG. 8 with the number of the application data unit. In one example, as shown in FIG. 9, the above step 656 further includes: the session management network element transmitting the fourth control information, the third control information and the QoS flow identifier to the access network element.

To summarize, in the technical solution according to the embodiment of the present disclosure, the session management network element re-determines the number of the application data unit, and transmits the number of the application data unit to the user plane network element, the terminal device and the access network element, respectively, such that in the subsequent transmission process of uplink and downlink data packets, each entity can use the number of the application data unit to identify the application data unit, thereby distinguishing application data units originating from different service data flows from each other.

Based on the transmission method of control plane signaling described in the above embodiments of FIG. 6 to FIG. 9, uplink and downlink data packets can be transmitted between the user plane network element, the terminal device, and the access network element.

First, the transmission process of an uplink data packet will be introduced and explained.

FIG. 10 is a flowchart illustrating a transmission method according to an embodiment of the present disclosure. The method can be applied to the system architecture shown in FIG. 1 and FIG. 2, and the method can be based on the QoS model shown in FIG. 3 and the user plane protocol stack shown in FIG. 5. The method may include at least some of the following steps.

At Step 662, a terminal device transmits first request information to an access network element, the first request information being used to request the access network element to allocate a transmission resource for an uplink data packet.

When there is a need for transmitting an uplink data packet, the terminal device transmits first request information to the access network element. The first request information is used to request the access network element to allocate a transmission resource for the uplink data packet. In an embodiment of the present disclosure, in order to implement transmission control of data at the application data unit level, the terminal device can read the application layer data of the uplink data packet, and match the application layer data with the first identification information and/or the service data flow filter, so as to add information that can identify the application data unit in the first request information.

Based on the above embodiment of FIG. 7, the terminal device receives the service data flow filter including the first identification information, such that the service data flow filter can be used to match the application data unit in the service data flow. Based on this, when the uplink data packet matches the service data flow filter, the first request information transmitted by the terminal device includes: a QoS flow identifier or a radio bearer identifier corresponding to the QoS flow identifier.

Based on the above embodiment of FIG. 8 and the above embodiment of FIG. 9, the terminal device receives the first identification information and the service data flow filter that are independent of each other, such that the service data flow filter can be used to match the service data flow (that is, not only the data packets in the application data unit in the service data flow can match the service data flow filter, but there are also data packets that do not belong to any application data unit can also match the service data flow filter). Based on this, when an uplink data packet matches the service data flow filter, the first request information transmitted by the terminal device includes: a QoS flow identifier or a radio bearer identifier corresponding to the QoS flow identifier. On this basis, further based on the above embodiment of FIG. 8, when the uplink data packet matches the first identification information, the first request information transmitted by the terminal device includes: the QoS flow identifier and the first identification information, or the radio bearer identifier corresponding to the QoS flow identifier and the first identification information. Based on the above embodiment of FIG. 9, when the uplink data packet matches the first identification information, the first request information transmitted by the terminal device includes: the QoS flow identifier and the number of the application data unit, or the radio bearer identifier corresponding to the QoS flow identifier and the number of the application data unit.

At Step 664, the access network element transmits first allocation information to the terminal device, the first allocation information being used to indicate a first transmission resource of the uplink data packet.

After receiving the first request information from the terminal device, the access network element allocates the first transmission resource for transmitting the uplink data packet to the terminal device, and transmits the first allocation information to the terminal device, the first allocation information being used indicate the first transmission resource of the uplink data packet. In order to implement transmission control of data at the application data unit level, the access network element may determine the first transmission resource based on the control parameter of the application data unit and/or the QoS parameter of the service data flow.

Based on the above embodiment of FIG. 7, the access network element receives the third control information and the QoS flow identifier. Based on this, when the first request information includes the QoS flow identifier or the radio bearer identifier corresponding to the QoS flow identifier, the access network element determines the first transmission resource based on the third control information.

Based on the above embodiment of FIG. 8 and the above embodiment of FIG. 9, the access network element receives the fourth control information, the third control information, the QoS flow identifier, and the first identification information (or the identifier of the application data unit). Based on the embodiment of FIG. 8, when the first request information includes the QoS flow identifier and the first identification information, or when the first request information includes the radio bearer identifier corresponding to the QoS flow identifier and the first identification information, then the access network element determines the first transmission resource based on the fourth control information and the third control information. Based on the embodiment of FIG. 9, when the first request information includes the QoS flow identifier and the number of the application data unit, or when the first request information includes the radio bearer identifier corresponding to the QoS flow identifier and the number of the application data unit, the access network element determines the first transmission resource based on the fourth control information and the third control information.

At Step 666, the terminal device transmits the uplink data packet to the access network device based on the first transmission resource.

After receiving the first allocation information from the access network element, the terminal device can transmit the uplink data packet to the access network element based on the first transmission resource indicated by the first allocation information.

Secondly, the transmission process of a downlink data packet will be introduced and explained.

FIG. 11 is a flowchart illustrating a transmission method according to an embodiment of the present disclosure. The method can be applied to the system architecture shown in FIG. 1 and FIG. 2, and the method can be based on the QoS model shown in FIG. 3 and the user plane protocol stack shown in FIG. 5. The method may include at least some of the following steps.

At Step 672, a user plane network element transmits a downlink data packet to an access network element.

When the user plane network element needs to transmit a downlink data packet to the terminal device, it transmits a downlink data packet to the access network element. In an embodiment of the present disclosure, the user plane network element can read the application layer data of the downlink data packet, and match the application layer data with the first identification information and/or the service data flow filter, so as to add information that can identify the application data unit in the header of the downlink data packet, such that after the access network element receives the downlink data packet, the access network element can implement transmission control at the application data unit level based on the header of the downlink data packet.

Based on the above embodiment of FIG. 7, the user plane network element receives the service data flow filter including the first identification information, such that the service data flow filter can be used to match the application data unit in the service data flow. Based on this, when the downlink data packet matches the service data flow filter, the user plane network element adds the QoS flow identifier to the header of the downlink data packet.

Based on the above embodiment of FIG. 8 and the above embodiment of FIG. 9, the user plane network element receives the first identification information and the service data flow filter that are independent of each other, such that the service data flow filter can be used to match the service data flow (that is, not only the data packets in the application data unit in the service data flow can match the service data flow filter, but there are also data packets that do not belong to any application data unit in the service data flow can also match the service data flow filter). Based on this, when the downlink data packet matches the service data flow filter, the user plane network element adds the QoS flow identifier in the header of the downlink data packet. On this basis, further based on the above embodiment of FIG. 8, when the downlink data packet matches the first identification information, the user plane network element adds the QoS flow identifier and first identification information in the header of the downlink data packet. Based on the above embodiment of FIG. 9, when the downlink data packet matches the first identification information, the user plane network element adds the QoS flow identifier and the number of the application data unit in the header of the downlink data packet.

In one example, the header of the downlink data packet transmitted by the user plane network element may further include second identification information, the second identification information being used to indicate a relationship between the downlink data packet and the application data unit. Optionally, the second identification information may include, but not limited to, at least one of: a start packet identifier of the application data unit, an end packet identifier of the application data unit, the second identification information, etc. Here, the second identification information is used to identify all downlink data packets belonging to the application data unit. In other words, the user plane network element adds the same identifier for the downlink data packets belonging to the same application data unit, and adds different identifiers for the downlink data packets belonging to different application data units.

At Step 674, the access network element transmits the downlink data packet to the terminal device based on the second transmission resource.

After receiving the downlink data packet from the user plane network element, the access network element determines the second transmission resource for transmitting the downlink data packet based on the header of the downlink data packet, and transmits the downlink data packet to the terminal device based on the second transmission resource. In order to implement transmission control of data at the application data unit level, the access network element may determine the second transmission resource based on the control parameter of the application data unit and/or the QoS parameter of the service data flow.

Based on the above embodiment of FIG. 7, the access network element receives the third control information and the QoS flow identifier. Based on this, when the header of the downlink data packet includes the QoS flow identifier, the access network element determines the second transmission resource based on the third control information.

Based on the above embodiment of FIG. 8 and the above embodiment of FIG. 9, the access network element receives the fourth control information, the third control information, the QoS flow identifier, and the first identification information (or the identifier of the application data unit). Based on the embodiment of FIG. 8, when the header of the downlink data packet includes the QoS flow identifier and the first identification information, the access network element determines the second transmission resource based on the third control information and the fourth control information. Based on the embodiment of FIG. 9, when the header of the downlink data packet includes the QoS flow identifier and the number of the application data unit, the access network element determines the second transmission resource based on the third control information and the fourth control information.

To summarize, in the technical solution according to the embodiment of the present disclosure, the access network element determines the transmission resources of uplink and downlink data packets based on the control parameter of the application data unit and/or the QoS parameter of the service data flow, so as to control transmission of the uplink and downlink data packets at the application data unit level, thereby achieving QoS guarantee at a finer granularity.

It should be noted that in the above embodiments, from the perspective of interaction between the application function, the policy control network element, the session management network element, the user plane network element, the terminal device, and the access network element, the transmission methods according to the embodiments of the present disclosure have been introduced and explained. In the above embodiments, the steps performed by the policy control network element can be independently implemented as a transmission method at the policy control network element; the steps performed by the session management network element can be independently implemented as a transmission method at the session management network element; the steps performed by the terminal device can be independently implemented as a transmission method at the terminal device; the steps performed by the user plane network element can be independently implemented as a transmission method at the user plane; the steps performed by the access network element can be independently implemented as a transmission method at the access network element.

The apparatus embodiments of the present disclosure will be described. The apparatuses can be configured to implement the method embodiments of the present disclosure. For details not disclosed in the apparatus embodiments of the present disclosure, reference can be made to the method embodiments of the present disclosure. The apparatus embodiments of the present disclosure are not according to the invention and are present for illustration purpose only.

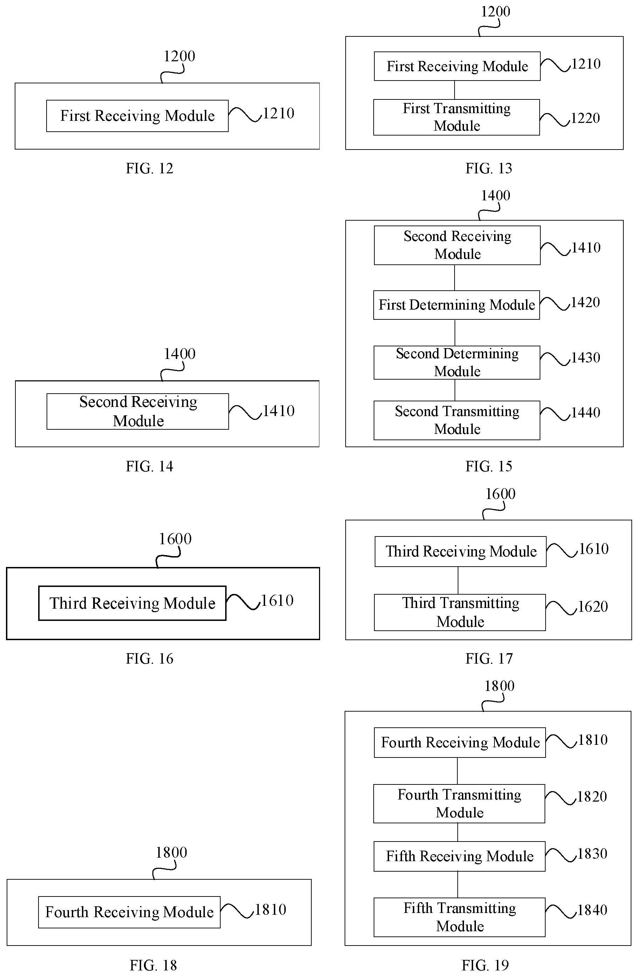

Reference is now made to FIG. 12, which shows a block diagram of a transmission apparatus according to an embodiment of the present disclosure. The apparatus has the function of implementing the above method example in the policy control network element, and the function may be implemented by hardware, or by hardware executing corresponding software. The apparatus can be the policy control network element described above, or can be provided in the policy control network element. As shown in FIG. 12, the apparatus 1200 may include a first receiving module 1210.

The first receiving module 1210 is configured to receive first identification information from an application function, the first identification information being used to identify an application data unit in a service data flow.

In one example, the first identification information may include at least one of: first identifying information used to identify the application data unit; and first type information used to indicate a type of the application data unit.

In one example, the first receiving module 1210 may be configured to: receive a service data flow filter from the application function, the service data flow filter including the first identification information; or receive the first identification information and a service data flow filter from the application function, the service data flow filter being used to match the service data flow.

In one example, the first receiving module 1210 may be further configured to: receive first requirement information from the application function, the first requirement information being used to indicate a control requirement of the application data unit.

In one example, the first requirement information may include at least one of: first level information used to indicate a level of the application data unit; and first parameter information used to indicate a Quality of Service (QoS) parameter of the application data unit.

In one example, as shown in FIG. 13, the apparatus 1200 may further include: a first transmitting module 1220 configured to transmit the first identification information and first control information to a session management network element, the first control information being used to indicate a control parameter of the application data unit.

In one example, the first control information may include at least one of: second level information used to indicate a level of the application data unit; and second parameter information used to indicate a QoS parameter of the application data unit.

In one example, as shown in FIG. 13, the first transmitting module 1220 may be configured to: transmit a service data flow filter to the session management network element, the service data flow filter including the first identification information; or transmit the first identification information and a service data flow filter to the session management network element.

In one example, the first receiving module 1210 may be further configured to: receive second requirement information from the application function, the second requirement information being used to indicate a QoS requirement of the service data flow.

In one example, as shown in FIG. 13, the apparatus 1200 may further include: a first transmitting module 1220 configured to transmit second control information to the session management network element, the second control information being used to indicate a QoS parameter of the service data flow.

Reference is now made to FIG. 14, which shows a block diagram of a transmission apparatus according to an embodiment of the present disclosure. The apparatus has the function of implementing the method example in the session management network element, and the function may be implemented by hardware, or by hardware executing corresponding software. The apparatus may be the session management network element described above, or may be provided in the session management network element. As shown in FIG. 14, the apparatus 1400 may include a second receiving module 1410.

The second receiving module 1410 is configured to receive first identification information and first control information from a policy control network element, the first identification information being used to identify an application data unit in a service data flow, and the first control information being used to indicate a control parameter of the application data unit.

In one example, the first identification information may include at least one of: first identifying information used to identify the application data unit; and first type information used to indicate a type of the application data unit.

In one example, the first control information may include at least one of: second level information used to indicate a level of the application data unit; and second parameter information used to indicate a QoS parameter of the application data unit.

In one example, the second receiving module 1410 may be configured to: receive a service data flow filter from the policy control network element, the service data flow filter including the first identification information; or receive the first identification information and a service data flow filter from the policy control network element, the service data flow filter being used to match the service data flow.

In one example, the second receiving module 1410 may be further configured to: receive second control information from the policy control network element, the second control information being used to indicate a QoS parameter of the service data flow.

In one example, as shown in FIG. 15, the apparatus 1400 further includes a first determination module 1420 configured to: determine a QoS flow for transmitting the service data flow and third control information based on the first control information, the third control information being used to indicate a control parameter of the application data unit in the QoS flow; or determine a QoS flow for transmitting the service data flow and fourth control information based on the second control information, the fourth control information being used to indicate a QoS parameter of the QoS flow; and determine third control information based on the first control information, the third control information being used to indicate a control parameter of the application data unit in the QoS flow.

The third control information includes at least one of: third level information used to indicate a level of the application data unit; and third parameter information used to indicate a QoS parameter of the application data unit.

In one example, as shown in FIG. 15, the apparatus 1400 may further include a second determining module 1430 configured to: determine a number of the application data unit based on the first identification information and/or a service data flow filter.

In one example, as shown in FIG. 15, the apparatus 1400 may further include: a second transmitting module 1440 configured to transmit to the terminal device at least one of: the first identification information, a QoS flow identifier, and a number of the application data unit, the QoS flow identifier being used to identify a QoS flow for transmitting the service data flow.

In one example, as shown in FIG. 15, the second transmitting module 1440 may be configured to: transmit a service data flow filter to the terminal device, the service data flow filter including the first identification information; or transmit the first identification information and a service data flow filter to the terminal device.

In one example, as shown in FIG. 15, the apparatus 1400 may further include: a second transmitting module 1440 configured to transmit to a user plane network element at least one of: the first identification information, a QoS flow identifier, and a number of the application data unit, the QoS flow identifier being used to identify a QoS flow for transmitting the service data flow.

In one example, as shown in FIG. 15, the second transmitting module 1440 may be configured to: transmit a service data flow filter to the user plane network element, the service data flow filter including the first identification information; or transmit the first identification information and a service data flow filter to the user plane network element.

In one example, as shown in FIG. 15, the apparatus 1400 may further include: a second transmitting module 1440 configured to transmit to an access network element at least one of: third control information, a QoS flow identifier, fourth control information, the first identification information, and a number of the application data unit, the QoS flow identifier being used to identify a QoS flow for transmitting the service data flow.

Reference is now made to FIG. 16, which shows a block diagram of a transmission apparatus according to an embodiment of the present disclosure. The apparatus has the function of implementing the above method example in the user plane network element, and the function may be implemented by hardware, or by hardware executing corresponding software. The apparatus can be the user plane network element described above, or can be provided in the user plane network element. As shown in FIG. 16, the apparatus 1600 may include a third receiving module 1610.

The third receiving module 1610 is configured to receive first identification information from a session management network element, the first identification information being used to identify an application data unit in a service data flow.

In one example, the first identification information may include at least one of: first identifying information used to identify the application data unit; and first type information used to indicate a type of the application data unit.

In one example, the third receiving module 1610 may be configured to: receive a service data flow filter from the session management network element, the service data flow filter including the first identification information; or receive the first identification information and a service data flow filter from the session management network element, the service data flow filter being used to match the service data flow.

In one example, the third receiving module 1610 may be further configured to: receive a Quality of Service (QoS) flow identifier from the session management network element, the QoS flow identifier being used to identify a QoS flow for transmitting the service data flow.

In one example, the third receiving module 1610 may be further configured to: receive a number of the application data unit from the session management network element.

In one example, as shown in FIG. 17, the apparatus 1600 may further include a third transmitting module 1620 configured to transmit a downlink data packet to an access network element. When the downlink data packet matches a service data flow filter, a header of the downlink data packet includes a QoS flow identifier and the service data flow filter includes the first identification information, or when the downlink data packet matches a service data flow filter, a header of the downlink data packet includes a QoS flow identifier; when the downlink data packet matches the first identification information, the header of the downlink data packet includes the QoS flow identifier and the first identification information, or the header of the downlink data packet includes the QoS flow identifier and the number of the application data unit.

In one example, the header of the downlink data packet may further include: second identification information used to indicate a relationship between the downlink data packet and the application data unit.

In one example, the second identification information may include at least one of: a start packet identifier of the application data unit, an end packet identifier of the application data unit, and second identifying information used to identify all downlink data packets belonging to the application data unit.

Reference is now made to FIG. 18, which shows a block diagram of a transmission apparatus according to an embodiment of the present disclosure. The apparatus has the function of implementing the method example in the terminal device, and the function may be implemented by hardware, or by hardware executing corresponding software. The apparatus may be the terminal device described above, or may be provided in the terminal device. As shown in FIG. 18, the apparatus 1800 may include: a fourth receiving module 1810.

The fourth receiving module 1810 is configured to receive first identification information from a session management network element, the first identification information being used to identify an application data unit in a service data flow.

In one example, the first identification information may include at least one of: first identifying information used to identify the application data unit; and first type information used to indicate a type of the application data unit.

In one example, the fourth receiving module 1810 may be configured to: receive a service data flow filter from the session management network element, the service data flow filter including the first identification information; or receive the first identification information and a service data flow filter from the session management network element, the service data flow filter being used to match the service data flow.

In one example, the fourth receiving module 1810 may be further configured to: receive a Quality of Service (QoS) flow identifier from the session management network element, the QoS flow identifier being used to identify a QoS flow for transmitting the service data flow.

In one example, the fourth receiving module 1810 may be further configured to: receive a number of the application data unit from the session management network element.

In one example, as shown in FIG. 19, the apparatus 1800 may further include a fourth transmitting module 1820 configured to transmit first request information to an access network element, the first request information being used to request the access network element to allocate a transmission resource for an uplink data packet; a fifth receiving module 1830 configured to receive first allocation information from the access network element, the first allocation information being used to indicate a first transmission resource for the uplink data packet; and a fifth transmitting module 1840 configured to transmit the uplink data packet to the access network device based on the first transmission resource.

In one example, when the uplink data packet matches a service data flow filter, the first request information includes a QoS flow identifier or a radio bearer identifier corresponding to the QoS flow identifier, the service data flow filter including the first identification information, or when the uplink data packet matches a service data flow filter, the first request information includes a QoS flow identifier or a radio bearer identifier corresponding to the QoS flow identifier; when the uplink data packet matches the first identification information, the first request information includes a QoS flow identifier and the first identification information, or the first request information includes a radio bearer identifier corresponding to the QoS flow identifier and the first identification information, or the first request information includes a QoS flow identifier and the number of the application data unit, or the first request information includes a radio bearer identifier corresponding to the QoS flow identifier and the number of the application data unit.

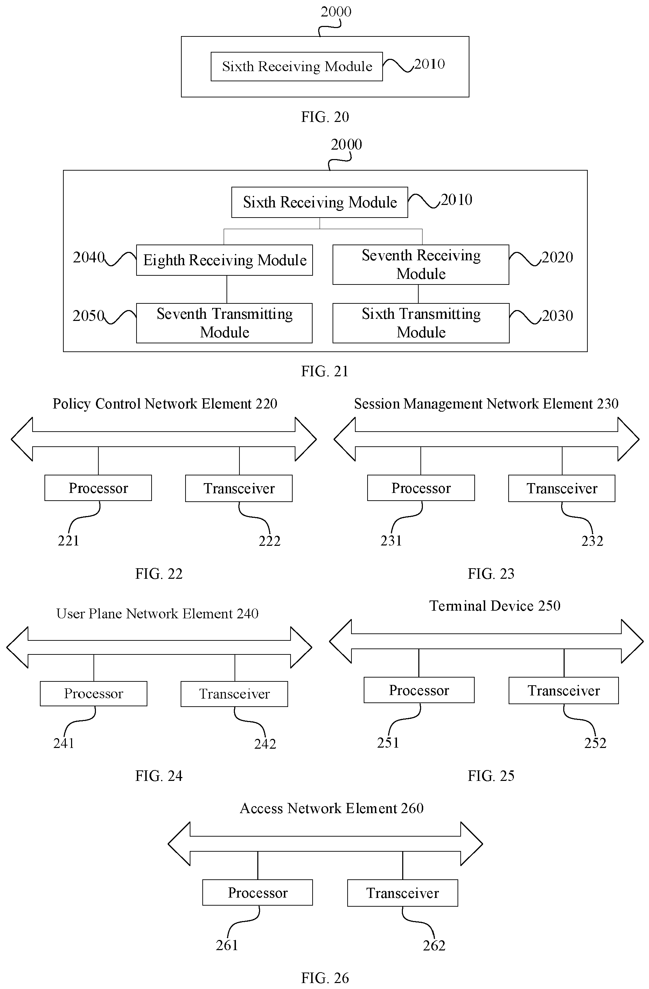

Reference is now made to FIG. 20, which shows a block diagram of a transmission apparatus according to an embodiment of the present disclosure. The apparatus has the function of implementing the method example in the access network element, and the function may be implemented by hardware, or by hardware executing corresponding software. The apparatus may be the access network element described above, or may be provided in the access network element. As shown in FIG. 20, the apparatus 2000 may include a sixth receiving module 2010.

The sixth receiving module 2010 is configured to receive third control information from a session management network element, the third control information being used to indicate a control parameter of an application data unit in a Quality of Service (QoS) flow.

The third control information includes at least one of: third level information used to indicate a level of the application data unit; and third parameter information used to indicate a QoS parameter of the application data unit.

In one example, the sixth receiving module 2010 may be further configured to: receive fourth control information from the session management network element, the fourth control information being used to indicate a QoS parameter of the QoS flow.

In one example, the sixth receiving module 2010 may be further configured to: receive first identification information from the session management network element, the first identification information being used to identify the application data unit; or receive a number of the application data unit from the session management network element.

In one example, the first identification information may include at least one of: first identifying information used to identify the application data unit; and first type information used to indicate a type of the application data unit.

In one example, the sixth receiving module 2010 may be further configured to: receive a QoS flow identifier from the session management network element, the QoS flow identifier being used to identify the QoS flow.

In one example, as shown in FIG. 21, the apparatus 2000 may further include: a seventh receiving module 2020 configured to receive a downlink data packet from a user plane network element; and a sixth transmitting module 2030 configured to transmit the downlink data packet to the terminal device based on a second transmission resource. When a header of the downlink data packet includes a QoS flow identifier, the second transmission resource is determined based on the third control information, or when the header of the downlink data packet includes a QoS flow identifier and the first identification information, or when the header of the downlink data packet includes a QoS flow identifier and a number of the application data unit, the second transmission resource is determined based on the third control information and fourth control information.

In one example, the header of the downlink data packet may further include: second identification information used to indicate a relationship between the downlink data packet and the application data unit.

In one example, the second identification information may include at least one of: a start packet identifier of the application data unit, an end packet identifier of the application data unit, and second identifying information used to identify all downlink data packets belonging to the application data unit.

In one example, as shown in FIG. 21, the apparatus 2000 may further include: an eighth receiving module 2040 configured to receive first request information from a terminal device, the first request information being used to request the access network element to allocate a transmission resource for an uplink data packet; and a seventh transmitting module 2050 configured to transmit first allocation information to the terminal device, the first allocation information being used to indicate a first transmission resource for the uplink data packet. When the first request information includes a QoS flow identifier or a radio bearer identifier corresponding to the QoS flow identifier, the first transmission resource is determined based on the third control information, or when the first request information includes a QoS flow identifier and the first identification information, or when the first request information includes a radio bearer identifier corresponding to the QoS flow identifier and the first identification information, or when the first request information includes a QoS flow identifier and a number of the application data unit, or when the first request information includes a radio bearer identifier corresponding to the QoS flow identifier and a number of the application data unit, the first transmission resource is determined based on the fourth control information and the third control information.

It should be noted that, when the apparatus provided in any of the above embodiments achieves its functions, the division of the above functional modules is provided for the purpose of illustration only. In practice, the above functions can be allocated to different functional modules depending one actual requirements. That is, the content/structure of the apparatus can be divided into different functional modules to complete all or part of the functions described above.

Regarding the apparatus in any of the above embodiment, the specific operation of each module has been described in detail in the corresponding method embodiments, and description thereof will be omitted here.

Reference is now made to FIG. 22, which is a schematic diagram showing a structure of a policy control network element 220 according to an embodiment of the present disclosure. The structure of the policy control network element 220 is not according to the invention and is present for illustration purpose only.

For example, the policy control network element can be configured to implement the above transmission method in the policy control network element 220. In particular, the policy control network element 220 may include: a processor 221 and a transceiver 222 connected to the processor 221.

Here, the processor 221 includes one or more processing cores, and the processor 221 implements various functional applications and information processing by executing software programs and modules.

The transceiver 222 includes a receiver and a transmitter. Optionally, the transceiver 222 may be a communication chip.

In an example, the policy control network element 220 further includes a memory and a bus. The memory is connected to the processor through the bus.

The memory can be configured to store a computer program, and the processor can be configured to execute the computer program, so as to implement various steps performed by the policy control network element 220 in the above method embodiments.

In addition, the memory can be implemented by any type of volatile or non-volatile storage device or any combination thereof, the volatile or non-volatile storage device including, but not limited to: Random-Access Memory (RAM), Read-Only Memory (ROM), Erasable Programmable Read-Only Memory (EPROM), Electrically Erasable Programmable Read-Only Memory (EEPROM), flash memory or other solid state storage technology, Compact Disc Read-Only Memory (CD-ROM), Digital Video Disc (DVD) or other optical storage, cassette, magnetic tape, magnetic disk storage or other magnetic storage device.

The transceiver 222 is configured to receive first identification information from an application function, the first identification information being used to identify an application data unit in a service data flow.

In one example, the first identification information may include at least one of: first identifying information used to identify the application data unit; and first type information used to indicate a type of the application data unit.

In one example, the transceiver 222 is configured to: receive a service data flow filter from the application function, the service data flow filter including the first identification information; or receive the first identification information and a service data flow filter from the application function, the service data flow filter being used to match the service data flow.

In one example, the transceiver 222 is further configured to receive first requirement information from the application function, the first requirement information being used to indicate a control requirement of the application data unit.

In one example, the first requirement information may include at least one of: first level information used to indicate a level of the application data unit; and first parameter information used to indicate a Quality of Service (QoS) parameter of the application data unit.

In one example, the transceiver 222 is configured to transmit the first identification information and first control information to a session management network element, the first control information being used to indicate a control parameter of the application data unit.

In one example, the first control information may include at least one of: second level information used to indicate a level of the application data unit; and second parameter information used to indicate a QoS parameter of the application data unit.

In one example, the transceiver 222 is configured to: transmit a service data flow filter to the session management network element, the service data flow filter including the first identification information; or transmit the first identification information and a service data flow filter to the session management network element.

In one example, the transceiver 222 is further configured to receive second requirement information from the application function, the second requirement information being used to indicate a QoS requirement of the service data flow.

In one example, the transceiver 222 is further configured to transmit second control information to the session management network element, the second control information being used to indicate a QoS parameter of the service data flow.

FIG. 23 is a schematic diagram showing a structure of a session management network element 230 according to an embodiment of the present disclosure. The session management network element is configured to implement the above transmission method in the session management network element. In particular, the session management network element 230 may include: a processor 231 and a transceiver 232 connected to the processor 231.

Here, the processor 231 includes one or more processing cores, and the processor 231 implements various functional applications and information processing by executing software programs and modules.

The transceiver 232 includes a receiver and a transmitter. Optionally, the transceiver 232 may be a communication chip.

In an example, the session management network element 230 further includes a memory and a bus. The memory is connected to the processor through the bus.

The memory can be configured to store a computer program, and the processor can be configured to execute the computer program, so as to implement various steps performed by the session management network element in the above method embodiments.

In addition, the memory can be achieved by any type of volatile or non-volatile storage device or any combination thereof, and the volatile or non-volatile storage device includes, but not limited to: RAM, ROM, EPROM, EEPROM, flash memory or another solid-state storage technology, CD-ROM, DVD or another optical storage, tape cartridge, tape, disks storage or another magnetic storage device.

The transceiver 232 is configured to receive first identification information and first control information from a policy control network element, the first identification information being used to identify an application data unit in a service data flow, and the first control information being used to indicate a control parameter of the application data unit.

In one example, the first identification information may include at least one of: first identifying information used to identify the application data unit; and first type information used to indicate a type of the application data unit.

In one example, the first control information may include at least one of: second level information used to indicate a level of the application data unit; and second parameter information used to indicate a QoS parameter of the application data unit.

In one example, the transceiver 232 is configured to: receive a service data flow filter from the policy control network element, the service data flow filter including the first identification information; or receive the first identification information and a service data flow filter from the policy control network element, the service data flow filter being used to match the service data flow.

In one example, the transceiver 232 is further configured to receive second control information from the policy control network element, the second control information being used to indicate a QoS parameter of the service data flow.

In one example, the processor 231 is configured to determine a QoS flow for transmitting the service data flow and third control information based on the first control information, the third control information being used to indicate a control parameter of the application data unit in the QoS flow; or determine a QoS flow for transmitting the service data flow and fourth control information based on the second control information, the fourth control information being used to indicate a QoS parameter of the QoS flow; and determine third control information based on the first control information, the third control information being used to indicate a control parameter of the application data unit in the QoS flow.

The third control information includes at least one of: third level information used to indicate a level of the application data unit; and third parameter information used to indicate a QoS parameter of the application data unit.

In one example, the processor 231 is further configured to determine a number of the application data unit based on the first identification information and/or a service data flow filter.

In one example, the transceiver 232 is further configured to: transmit to the terminal device at least one of: the first identification information, a QoS flow identifier, and a number of the application data unit, the QoS flow identifier being used to identify a QoS flow for transmitting the service data flow.

In one example, the transceiver 232 is further configured to transmit a service data flow filter to the terminal device, the service data flow filter including the first identification information; or transmit the first identification information and a service data flow filter to the terminal device.

In one example, the transceiver 232 is further configured to: transmit to a user plane network element at least one of: the first identification information, a QoS flow identifier, and a number of the application data unit, the QoS flow identifier being used to identify a QoS flow for transmitting the service data flow.

In one example, the transceiver 232 is further configured to: transmit a service data flow filter to the user plane network element, the service data flow filter including the first identification information; or transmit the first identification information and a service data flow filter to the user plane network element.

In one example, the transceiver 232 is further configured to transmit to an access network element at least one of: third control information, a QoS flow identifier, fourth control information, the first identification information, and a number of the application data unit, the QoS flow identifier being used to identify a QoS flow for transmitting the service data flow.

FIG. 24 is a schematic diagram showing a structure of a user plane network element 240 according to an embodiment of the present disclosure. The structure of the user plane network element 240 is not according to the invention and is present for illustration purpose only.

For example, the user plane network element can be configured to implement the above transmission method in the user plane network element. In particular, the user plane network element 240 may include: a processor 241 and a transceiver 242 connected to the processor 241.

Here, the processor 241 includes one or more processing cores, and the processor 241 implements various functional applications and information processing by executing software programs and modules.

The transceiver 242 includes a receiver and a transmitter. Optionally, the transceiver 242 may be a communication chip.

In an example, the user plane network element 240 further includes a memory and a bus. The memory is connected to the processor through the bus.

The memory can be configured to store a computer program, and the processor can be configured to execute the computer program, so as to implement various steps performed by the user plane network element in the above method embodiments.

In addition, the memory can be achieved by any type of volatile or non-volatile storage device or any combination thereof, and the volatile or non-volatile storage device includes, but not limited to: RAM, ROM, EPROM, EEPROM, flash memory or another solid-state storage technology, CD-ROM, DVD or another optical storage, tape cartridge, tape, disks storage or another magnetic storage device.

The transceiver 242 is configured to receive first identification information from a session management network element, the first identification information being used to identify an application data unit in a service data flow.

In one example, the first identification information may include at least one of: first identifying information used to identify the application data unit; and first type information used to indicate a type of the application data unit.

In one example, the transceiver 242 is configured to: receive a service data flow filter from the session management network element, the service data flow filter including the first identification information; or receive the first identification information and a service data flow filter from the session management network element, the service data flow filter being used to match the service data flow.

In one example, the transceiver 242 is further configured to: receive a Quality of Service (QoS) flow identifier from the session management network element, the QoS flow identifier being used to identify a QoS flow for transmitting the service data flow.

In one example, the transceiver 242 is further configured to: receive a number of the application data unit from the session management network element.

In one example, the transceiver 242 is further configured to: transmit a downlink data packet to an access network element. When the downlink data packet matches a service data flow filter, a header of the downlink data packet includes a QoS flow identifier and the service data flow filter includes the first identification information, or when the downlink data packet matches a service data flow filter, a header of the downlink data packet includes a QoS flow identifier; when the downlink data packet matches the first identification information, the header of the downlink data packet includes the QoS flow identifier and the first identification information, or the header of the downlink data packet includes the QoS flow identifier and the number of the application data unit.

In one example, the header of the downlink data packet may further include: second identification information used to indicate a relationship between the downlink data packet and the application data unit.

In one example, the second identification information may include at least one of: a start packet identifier of the application data unit, an end packet identifier of the application data unit, and second identifying information used to identify all downlink data packets belonging to the application data unit.

FIG. 25 is a schematic diagram showing a structure of a terminal device 250 according to an embodiment of the present disclosure. The structure of the terminal device 250 is not according to the invention and is present for illustration purpose only.

For example, the terminal device can be configured to implement the above transmission method in the terminal device. In particular, the terminal device 250 may include: a processor 251 and a transceiver 252 connected to the processor 251.

Here, the processor 251 includes one or more processing cores, and the processor 251 implements various functional applications and information processing by executing software programs and modules.

The transceiver 252 includes a receiver and a transmitter. Optionally, the transceiver 252 may be a communication chip.

In an example, the terminal device 250 further includes a memory and a bus. The memory is connected to the processor through the bus.

The memory can be configured to store a computer program, and the processor can be configured to execute the computer program, so as to implement various steps performed by the terminal device in the above method embodiments.

In addition, the memory can be achieved by any type of volatile or non-volatile storage device or any combination thereof, and the volatile or non-volatile storage device includes, but not limited to: RAM, ROM, EPROM, EEPROM, flash memory or another solid-state storage technology, CD-ROM, DVD or another optical storage, tape cartridge, tape, disks storage or another magnetic storage device.

The transceiver 252 is configured to receive first identification information from a session management network element, the first identification information being used to identify an application data unit in a service data flow.

In one example, the first identification information may include at least one of: first identifying information used to identify the application data unit; and first type information used to indicate a type of the application data unit.

In one example, the transceiver 242 is configured to: receive a service data flow filter from the session management network element, the service data flow filter including the first identification information; or receive the first identification information and a service data flow filter from the session management network element, the service data flow filter being used to match the service data flow.

In one example, the transceiver 242 is configured to: receive a Quality of Service (QoS) flow identifier from the session management network element, the QoS flow identifier being used to identify a QoS flow for transmitting the service data flow.

In one example, the transceiver 242 is configured to receive a number of the application data unit from the session management network element.

In one example, the transceiver 242 is further configured to: transmit first request information to an access network element, the first request information being used to request the access network element to allocate a transmission resource for an uplink data packet; receive first allocation information from the access network element, the first allocation information being used to indicate a first transmission resource for the uplink data packet; and transmit the uplink data packet to the access network device based on the first transmission resource.

In one example, when the uplink data packet matches a service data flow filter, the first request information includes a QoS flow identifier or a radio bearer identifier corresponding to the QoS flow identifier, the service data flow filter including the first identification information, or when the uplink data packet matches a service data flow filter, the first request information includes a QoS flow identifier or a radio bearer identifier corresponding to the QoS flow identifier; when the uplink data packet matches the first identification information, the first request information includes a QoS flow identifier and the first identification information, or the first request information includes a radio bearer identifier corresponding to the QoS flow identifier and the first identification information, or the first request information includes a QoS flow identifier and the number of the application data unit, or the first request information includes a radio bearer identifier corresponding to the QoS flow identifier and the number of the application data unit.

FIG. 26 is a schematic diagram showing a structure of an access network element 260 according to an embodiment of the present disclosure. The access network element is configured to implement the above transmission method in the access network element. In particular, the access network element 260 may include: a processor 261 and a transceiver 262 connected to the processor 261.

Here, the processor 261 includes one or more processing cores, and the processor 261 implements various functional applications and information processing by executing software programs and modules.

The transceiver 262 includes a receiver and a transmitter. Optionally, the transceiver 262 may be a communication chip.

In an example, the access network element 260 further includes a memory and a bus. The memory is connected to the processor through the bus.

The memory can be configured to store a computer program, and the processor can be configured to execute the computer program, so as to implement various steps performed by the access network element in the above method embodiments.

In addition, the memory can be achieved by any type of volatile or non-volatile storage device or any combination thereof, and the volatile or non-volatile storage device includes, but not limited to: RAM, ROM, EPROM, EEPROM, flash memory or another solid-state storage technology, CD-ROM, DVD or another optical storage, tape cartridge, tape, disks storage or another magnetic storage device.

The transceiver 262 is configured to receive third control information from a session management network element, the third control information being used to indicate a control parameter of an application data unit in a Quality of Service (QoS) flow.

The third control information includes at least one of: third level information used to indicate a level of the application data unit; and third parameter information used to indicate a QoS parameter of the application data unit.

In one example, the transceiver 262 is further configured to receive fourth control information from the session management network element, the fourth control information being used to indicate a QoS parameter of the QoS flow.

In one example, the transceiver 262 is further configured to: receive first identification information from the session management network element, the first identification information being used to identify the application data unit; or receive a number of the application data unit from the session management network element.

In one example, the first identification information may include at least one of: first identifying information used to identify the application data unit; and first type information used to indicate a type of the application data unit.

In one example, the transceiver 262 is further configured to: receive a QoS flow identifier from the session management network element, the QoS flow identifier being used to identify the QoS flow.

In one example, the transceiver 262 is further configured to: receive a downlink data packet from a user plane network element; and transmit the downlink data packet to the terminal device based on a second transmission resource. When a header of the downlink data packet includes a QoS flow identifier, the second transmission resource is determined based on the third control information, or when the header of the downlink data packet includes a QoS flow identifier and the first identification information, or when the header of the downlink data packet includes a QoS flow identifier and a number of the application data unit, the second transmission resource is determined based on the third control information and fourth control information.

In one example, the header of the downlink data packet may further include: second identification information used to indicate a relationship between the downlink data packet and the application data unit.

In one example, the second identification information may include at least one of: a start packet identifier of the application data unit, an end packet identifier of the application data unit, and second identifying information used to identify all downlink data packets belonging to the application data unit.

In one example, the transceiver 262 is further configured to: receive first request information from a terminal device, the first request information being used to request the access network element to allocate a transmission resource for an uplink data packet; and transmit first allocation information to the terminal device, the first allocation information being used to indicate a first transmission resource for the uplink data packet. When the first request information includes a QoS flow identifier or a radio bearer identifier corresponding to the QoS flow identifier, the first transmission resource is determined based on the third control information, or when the first request information includes a QoS flow identifier and the first identification information, or when the first request information includes a radio bearer identifier corresponding to the QoS flow identifier and the first identification information, or when the first request information includes a QoS flow identifier and a number of the application data unit, or when the first request information includes a radio bearer identifier corresponding to the QoS flow identifier and a number of the application data unit, the first transmission resource is determined based on the fourth control information and the third control information.

It can be appreciated by those skilled in the art that, in one or more of the above examples, the functions described in the embodiments of the present disclosure may be implemented by hardware, software, firmware, or any combination thereof. When implemented by software, the functions may be stored in a computer-readable medium or transmitted as one or more instructions or codes on a computer-readable medium. The computer-readable medium includes a computer storage medium and a communication medium. The communication medium includes any medium that facilitates transfer of a computer program from one place to another. The storage medium can be any available medium that can be accessed by a general purpose or special purpose computer.

While the preferred embodiments of the present disclosure have been described above, they are not intended to limit the present disclosure. Any modifications, or improvements that can be made within the principle of the present disclosure are to be encompassed by the scope of the present disclosure, which is only defined by the appended claims.

## Claims

1. A transmission method, applied in an access network element, comprising
receiving (650; 652) third control information from a session management network element, the third control information being used to indicate a control parameter of an application data unit in a Quality of Service, QoS, flow;
wherein the third control information comprises third parameter information used to indicate a QoS parameter of the application data unit, wherein the third parameter information comprises at least one of a bit error rate, a transmission delay or a code rate requirement, and the application data unit comprises a frame or a coded slice within the frame.

2. The method according to claim 1, wherein the third control information further comprises:
third level information, wherein the third level information comprises at least one of: an importance level of the frame or the coded slice within the frame in an application layer, or whether the frame or the coded slice within the frame is allowed to be skipped or discarded.

3. The method according to claim 1 or 2, further comprising:
receiving (654) fourth control information from the session management network element, the fourth control information being used to indicate a QoS parameter of the QoS flow.

4. The method according to any one of claims 1 to 3, further comprising:
receiving (654) first identification information from the session management network element, the first identification information being used to identify the application data unit; or
receiving (656) a number of the application data unit from the session management network element.

5. The method according to claim 4, wherein the first identification information comprises at least one of:
first identifying information used to identify the application data unit; and
first type information used to indicate a type of the application data unit.

6. The method according to any one of claims 1 to 5, further comprising:
receiving (656) a QoS flow identifier from the session management network element, the QoS flow identifier being used to identify the QoS flow.

7. The method according to any one of claims 1 to 6, further comprising, subsequent to receiving (650; 652) the third control information from the session management network element:
receiving (672) a downlink data packet from a user plane network element; and
transmitting (674) the downlink data packet to a terminal device based on a second transmission resource, wherein
when a header of the downlink data packet includes a QoS flow identifier, the second transmission resource is determined based on the third control information, or
when the header of the downlink data packet includes a QoS flow identifier and the first identification information, or when the header of the downlink data packet includes a QoS flow identifier and a number of the application data unit, the second transmission resource is determined based on the third control information and fourth control information.

8. The method according to claim 7, wherein the header of the downlink data packet further includes: second identification information used to indicate a relationship between the downlink data packet and the application data unit.

9. The method according to claim 8, wherein the second identification information comprises at least one of: a start packet identifier of the application data unit, an end packet identifier of the application data unit, and second identifying information used to identify all downlink data packets belonging to the application data unit.

10. A transmission method, applied in a session management network element, comprising:
transmitting (650; 652) third control information to an access network element, the third control information being used to indicate a control parameter of an application data unit in a Quality of Service, QoS, flow;
wherein the third control information comprises third parameter information used to indicate a QoS parameter of the application data unit, wherein the third parameter information comprises at least one of a bit error rate, a transmission delay or a code rate requirement, and the application data unit comprises a frame or a coded slice within the frame.

11. The method according to claim 10, wherein the third control information further comprises:
third level information, wherein the third level information comprises at least one of: an importance level of the frame or the coded slice within the frame in an application layer, or whether the frame or the coded slice within the frame is allowed to be skipped or discarded.

12. The method according to claim 10 or 11, wherein the application data unit is a frame or a coded slice within the frame.

13. An access network element (260), comprising a processor (261) and a memory having at least one program stored thereon, which, when loaded and executed by the processor (261), causes the access network element (260) to implement the transmission method according to any of claims 1-9.

14. A session management network element (230), comprising a processor (231) and a memory having at least one program stored thereon, which, when loaded and executed by the processor (231), causes the access network element (230) to implement the transmission method according to any of claims 10-12.

## Patentansprüche

1. Übertragungsverfahren, das in einem Zugangsnetzwerkelement angewandt wird, umfassend:
Empfangen (650; 652) von dritten Steuerinformationen von einem Sitzungsverwaltungsnetzwerkelement, wobei die dritten Steuerinformationen verwendet werden, um einen Steuerparameter einer Anwendungsdateneinheit in einem Dienstgütedatenfluss, QoS-Datenfluss, anzuzeigen;
wobei die dritten Steuerinformationen dritte Parameterinformationen umfassen, die verwendet werden, um einen QoS-Parameter der Anwendungsdateneinheit anzuzeigen, wobei die dritten Parameterinformationen mindestens eine umfassen von einer Bitfehlerrate, einer Übertragungsverzögerung oder einer Coderatenanforderung, und wobei die Anwendungsdateneinheit einen Frame oder eine codierte Partition innerhalb des Frames umfasst.

2. Verfahren nach Anspruch 1, wobei die dritten Steuerinformationen außerdem umfassen:
Informationen einer dritten Ebene, wobei die Informationen der dritten Ebene mindestens eine umfassen von: einer Prioritätsebene des Frames der codierten Partition innerhalb des Frames in einer Anwendungsschicht oder ob es erlaubt ist, den Frame oder die codierte Partition innerhalb des Frames zu überspringen oder zu löschen.

3. Verfahren nach Anspruch 1 oder 2, das außerdem umfasst:
Empfangen (654) von vierten Steuerinformationen von dem Sitzungsverwaltungsnetzwerkelement, wobei die vierten Steuerinformationen verwendet werden, um einen QoS-Parameter des QoS-Datenflusses anzuzeigen.

4. Verfahren nach einem der Ansprüche 1 bis 3, das außerdem umfasst:
Empfangen (654) von ersten Identifizierungsinformationen von dem Sitzungsverwaltungsnetzwerkelement, wobei die ersten Identifizierungsinformationen zum Identifizieren der Anwendungsdateneinheit verwendet werden; oder
Empfangen (656) einer Nummer der Anwendungsdateneinheit von dem Sitzungsverwaltungsnetzwerkelement.

5. Verfahren nach Anspruch 4, wobei die ersten Identifizierungsinformationen mindestens eine umfassen von:
ersten Identifizierungsinformationen, die zum Identifizieren der Anwendungsdateneinheit verwendet werden; und
ersten Typinformationen, die zum Anzeigen eines Typs der Anwendungsdateneinheit verwendet werden.

6. Verfahren nach einem der Ansprüche 1 bis 5, das außerdem umfasst:
Empfangen (656) einer QoS-Datenflusskennung von dem Sitzungsverwaltungsnetzwerkelement, wobei die QoS-Datenflusskennung zum Identifizieren des QoS-Datenflusses verwendet wird.

7. Verfahren nach einem der Ansprüche 1 bis 6, das, nachfolgend zu dem Empfangen (650; 652) der dritten Steuerinformationen von einem Sitzungsverwaltungsnetzwerkelement, außerdem umfasst:
Empfangen (672) eines Downlink-Datenpakets von einem Benutzerebenennetzwerkelement; und
Übertragen (674) des Downlink-Datenpakets basierend auf einer zweiten Übertragungsressource zu einer Endgerätevorrichtung, wobei,
wenn eine Kopfzeile des Downlink-Datenpakets eine QoS-Datenflusskennung beinhaltet, die zweite Übertragungsressource basierend auf den dritten Steuerinformationen ermittelt wird, oder
wenn die Kopfzeile des Downlink-Datenpakets eine QoS-Datenflusskennung und die ersten Identifizierungsinformationen beinhaltet, oder wenn die Kopfzeile des Downlink-Datenpakets eine QoS-Datenflusskennung und eine Nummer der Anwendungsdateneinheit beinhaltet, die zweite Übertragungsressource basierend auf den dritten Steuerinformationen und den vierten Steuerinformationen ermittelt wird.

8. Verfahren nach Anspruch 7, wobei die Kopfzeile des Downlink-Datenpakets außerdem beinhaltet: zweite Identifizierungsinformationen, die verwendet werden, um eine Beziehung zwischen dem Downlink-Datenpaket und der Anwendungsdateneinheit anzuzeigen.

9. Verfahren nach Anspruch 8, wobei die zweiten Identifizierungsinformationen mindestens eine umfassen von: einer Startpaketkennung der Anwendungsdateneinheit, einer Endpaketkennung der Anwendungsdateneinheit, und zweiten Identifizierungsinformationen, die zum Identifizieren aller Downlink-Datenpakete verwendet werden, die zu der Anwendungsdateneinheit gehören.

10. Übertragungsverfahren, das in einem Sitzungsverwaltungsnetzwerkelement angewandt wird, umfassend:
Übertragen (650; 652) von dritten Steuerinformationen zu einem Zugangsnetzwerkelement, wobei die dritten Steuerinformationen verwendet werden, um einen Steuerparameter einer Anwendungsdateneinheit in einem Dienstgütedatenfluss, QoS-Datenfluss, anzuzeigen;
wobei die dritten Steuerinformationen dritte Parameterinformationen umfassen, die verwendet werden, um einen QoS-Parameter der Anwendungsdateneinheit anzuzeigen, wobei die dritten Parameterinformationen mindestens eine umfassen von einer Bitfehlerrate, einer Übertragungsverzögerung oder einer Coderatenanforderung, und wobei die Anwendungsdateneinheit einen Frame oder eine codierte Partition innerhalb des Frames umfasst.

11. Verfahren nach Anspruch 10, wobei die dritten Steuerinformationen außerdem umfassen: Informationen einer dritten Ebene, wobei die Informationen der dritten Ebene mindestens eine umfassen von: einer Prioritätsebene des Frames der codierten Partition innerhalb des Frames in einer Anwendungsschicht oder ob es erlaubt ist, den Frame oder die codierte Partition innerhalb des Frames zu überspringen oder zu löschen.

12. Verfahren nach Anspruch 10 oder 11, wobei die Anwendungsdateneinheit ein Frame oder eine codierte Partition innerhalb des Frames ist.

13. Zugangsnetzwerkelement (260), das einen Prozessor (261) und einen Speicher umfasst, in dem mindestens ein Programm gespeichert ist, das, wenn es von dem Prozessor (261) geladen und ausgeführt wird, das Zugangsnetzwerkelement (260) veranlasst, das Übertragungsverfahren nach einem der Ansprüche 1 bis 9 zu implementieren.

14. Sitzungsverwaltungsnetzwerkelement (230), das einen Prozessor (231) und einen Speicher umfasst, in dem mindestens ein Programm gespeichert ist, das, wenn es von dem Prozessor (231) geladen und ausgeführt wird, das Zugangsnetzwerkelement (230) veranlasst, das Übertragungsverfahren nach einem der Ansprüche 10 bis 12 zu implementieren.

## Revendications

1. Procédé de transmission, utilisé dans un élément de réseau d'accès, comprenant les étapes consistant à recevoir (650 ; 652) une troisième information de commande provenant d'un élément de réseau de gestion de session, la troisième information de commande servant à indiquer un paramètre de commande d'une unité de données d'application dans un flux de qualité de service, QoS ;
dans lequel la troisième information de commande comprend une troisième information de paramètre servant à indiquer un paramètre de QoS de l'unité de données d'application, la troisième information de paramètre comprenant au moins un élément parmi un taux d'erreurs sur les bits, un retard de transmission et une exigence de débit de code, et l'unité de données d'application comprenant une trame ou une tranche codée située dans la trame.

2. Procédé selon la revendication 1, dans lequel la troisième information de commande comprend également :
une troisième information de niveau, la troisième information de niveau comprenant au moins un élément parmi : un niveau d'importance de la trame ou de la tranche codée située dans la trame dans une couche d'application, et l'autorisation ou non de sauter ou d'éliminer la trame ou la tranche codée située dans la trame.

3. Procédé selon la revendication 1 ou 2, comprenant également l'étape consistant à :
recevoir (654) une quatrième information de commande provenant de l'élément de réseau de gestion de session, la quatrième information de commande servant à indiquer un paramètre de QoS du flux de QoS.

4. Procédé selon l'une quelconque des revendications 1 à 3, comprenant également les étapes consistant à :
recevoir (654) une première information d'identification provenant de l'élément de réseau de gestion de session, la première information d'identification servant à identifier l'unité de données d'application ; ou
recevoir (656) un numéro de l'unité de données d'application provenant de l'élément de réseau de gestion de session.

5. Procédé selon la revendication 4, dans lequel la première information d'identification comprend au moins une information parmi :
une première information d'identification servant à identifier l'unité de données d'application ; et
une première information de type servant à indiquer un type de l'unité de données d'application.

6. Procédé selon l'une quelconque des revendications 1 à 5, comprenant également l'étape consistant à :
recevoir (656) un identifiant de flux de QoS provenant de l'élément de réseau de gestion de session, l'identifiant de flux de QoS servant à identifier le flux de QoS.

7. Procédé selon l'une quelconque des revendications 1 à 6, comprenant également, à la suite de la réception (650 ; 652) de la troisième information de commande provenant de l'élément de réseau de gestion de session, les étapes consistant à :
recevoir (672) un paquet de données de liaison descendante provenant d'un élément de réseau de plan d'utilisateur ; et
transmettre (674) le paquet de données de liaison descendante à un dispositif terminal sur la base d'une deuxième ressource de transmission, dans lequel
lorsqu'un en-tête du paquet de données de liaison descendante contient un identifiant de flux de QoS, la deuxième ressource de transmission est déterminée sur la base de la troisième information de commande, ou
lorsque l'en-tête du paquet de données de liaison descendante contient un identifiant de flux de QoS et la première information d'identification, ou lorsque l'en-tête du paquet de données de liaison descendante contient un identifiant de flux de QoS et un numéro de l'unité de données d'application, la deuxième ressource de transmission est déterminée sur la base de la troisième information de commande et de la quatrième information de commande.

8. Procédé selon la revendication 7, dans lequel l'en-tête du paquet de données de liaison descendante contient également : une deuxième information d'identification servant à indiquer une relation entre le paquet de données de liaison descendante et l'unité des données d'application.

9. Procédé selon la revendication 8, dans lequel la deuxième information d'identification comprend au moins un identifiant parmi : un identifiant de paquet de début de l'unité de données d'application, un identifiant de paquet de fin de l'unité de données d'application, et une deuxième information d'identification servant à identifier tous les paquets de données de liaison descendante appartenant à l'unité de données d'application.

10. Procédé de transmission, utilisé dans un élément de réseau de gestion de session, comprenant les étapes consistant à
transmettre (650 ; 652) une troisième information de commande à un élément de réseau d'accès, la troisième information de commande servant à indiquer un paramètre de commande d'une unité de données d'application dans un flux de qualité de service, QoS ;
dans lequel la troisième information de commande comprend une troisième information de paramètre servant à indiquer un paramètre de QoS de l'unité de données d'application, la troisième information de paramètre comprenant au moins un élément parmi un taux d'erreurs sur les bits, un retard de transmission et une exigence de débit de code, et l'unité de données d'application comprenant une trame ou une tranche codée située dans la trame.

11. Procédé selon la revendication 10, dans lequel la troisième information de commande comprend également :
une troisième information de niveau, la troisième information de niveau comprenant au moins un élément parmi : un niveau d'importance de la trame ou de la tranche codée située dans la trame dans une couche d'application, et l'autorisation ou non de sauter ou d'éliminer la trame ou la tranche codée située dans la trame.

12. Procédé selon la revendication 10 ou 11, dans lequel l'unité de données d'application est une trame ou une tranche codée située dans la trame.

13. Élément de réseau d'accès (260), comprenant un processeur (261) et une mémoire sur laquelle est stocké au moins un programme qui, lorsqu'il est chargé et exécuté par le processeur (261), amène l'élément de réseau d'accès (260) à mettre en œuvre le procédé de transmission selon l'une quelconque des revendications 1 à 9.

14. Élément de réseau de gestion de session (230), comprenant un processeur (231) et une mémoire sur laquelle est stocké au moins un programme qui, lorsqu'il est chargé et exécuté par le processeur (231), amène l'élément de réseau d'accès (230) à mettre en œuvre le procédé de transmission selon l'une quelconque des revendications 10 à 12.
